# EUROPEAN PATENT SPECIFICATION

(11) **EP 3 570 230 B1**
(45) Date of publication and mention of the grant of the patent: **02.04.2025**
(21) Application number: 17891353.9
(22) Date of filing: 12.01.2017
(51) Int. Cl.: G06Q 10/04, G06Q 10/087

(54) **WORK SUPPORT DEVICE AND WORK SUPPORT METHOD**
ARBEITSUNTERSTÜTZUNGSVORRICHTUNG UND ARBEITSUNTERSTÜTZUNGSVERFAHREN
DISPOSITIF D'ASSISTANCE AU TRAVAIL ET PROCÉDÉ D'ASSISTANCE AU TRAVAIL

(43) Date of publication of application: 20.11.2019
(73) Proprietor: LOGISTEED, Ltd., Tokyo 104-8350 (JP)
(72) Inventor: FUKUSHIMA, Hiromi, Tokyo 100-8280 (JP); KOSAKA, Tadayoshi, Tokyo 100-8280 (JP); NAKAJIMA, Yohei, Tokyo 100-8280 (JP); SAKURADA, Takaharu, Tokyo 104-8350 (JP); TAKAHASHI, Emi, Tokyo 104-8350 (JP); SAWASHIMA, Shoji, Tokyo 104-8350 (JP)
(74) Representative: Mewburn Ellis LLP
(86) International application number: PCT/JP2017/000794
(87) International publication number: WO 2018/131114

(56) References cited:
- JP-A- 2000 103 406
- JP-A- 2000 109 218
- JP-A- 2001 187 607
- JP-A- 2003 206 027
- JP-A- 2004 075 320
- JP-A- 2004 126 663
- JP-A- 2005 202 587
- JP-A- 2007 164 257
- JP-A- 2012 051 696
- MELISSAEXVOICETALENT: "RSW SAT Stack Assist Tool", YOUTUBE, 30 June 2014 (2014-06-30), pages 1 - 4, XP054980618, Retrieved from the Internet <URL:https://www.youtube.com/watch?v=ssuaxBBu4Qc> [retrieved on 20200624]
- STEPHEN BALAKIRSKY ET AL: "Metrics for mixed pallet stacking", 20100928; 1077952576 - 1077952576, 28 September 2010 (2010-09-28), pages 54 - 61, XP058199130, ISBN: 978-1-4503-0290-6, DOI: 10.1145/2377576.2377587
- SAC36838: "3D Bin Packer Demo", YOUTUBE, 11 June 2008 (2008-06-11), pages 1 - 8, XP054980619, Retrieved from the Internet <URL:https://www.youtube.com/watch?v=KF7O0rwuyjg> [retrieved on 20200624]

## Description

### Technical Field

The present invention relates mainly to a work support device.

### Background Art

In the logistics business, a system that automates or supports works such as commodity collection, sorting, inspection, packing, and inventory management in the warehouse work is devised and spread. In the packing work, for example, a method of calculating the size of a packing box from the size of the commodity group to be packed to propose a packing box in which the packing fits is devised and spread.

As one of the supporting techniques for proposing the packing box, there is JP-A-2011-157139 (Patent Literature 1). This publication describes that "the volume of the articles to be collected into a collection container is determined based on the order information of articles from a sorting destination. A packing container that has the storage volume of articles that satisfies the determined volume is selected from a plurality of packing containers based on the determined volume. A division placement space in which the selected packing container is stored is displayed by the display device. As a result, the worker of a packing container loading area can take the most suitable packing container out of the division placement space displayed by the display device without determining the volume of the articles in the collection container. The working time is shortened by putting the packing container into the collection container according to the display of the display device in this way. Further, since the packing container that has the storage volume that satisfies the determined volume of articles is selected from the plurality of packing containers and displayed, the possibility of selecting an inappropriate packing container by mistake is reduced".

### Prior Art Literature

### Patent Literature

PTL 1: JP-A-2011-157139

### Summary of Invention

### Technical Problem

When a commodity is stored in a collection box at the time of commodity collection, since it is not known what kind of and how many commodities are necessary to be collected from now, it is difficult for the collection worker to appropriately select the size of the collection box in which the commodities fit. In addition, since it is not known what kind of and how many commodities are necessary to be collected later even during the collection work, it is difficult to do the collection work and storage work of the commodities while considering how to store the commodities in the collection box so that the commodities to be collected later will fit. The commodity collected later may not be in depending on the storage position. It is necessary to switch the storage position in the collection box so as to store the commodity collected later, which may reduce the work efficiency.

In addition, when the commodity collected in the collection box is stored in a packing box, since it is not known what kind of and how many commodities are collected in the collection box, it is difficult for the packing worker to appropriately select the size of the packing box in which the commodities fit. In addition, even during the packing work, since it is not known what size of the commodity comes out of the collection box later, for example, the commodity with characteristics on packing such as not to set sideways, it is difficult to do the packing work while considering how to store the commodities in the packing box so that all commodities can be stored at an appropriate position. The commodities may not all be in depending on the storage position. It is necessary to switch the storage position in the packing box, which may reduce the work efficiency.

Therefore, as in Patent Literature 1, since the size of the collection box or the packing box to be stored from the volume information of the commodity group is determined and presented to the worker, which can be selected without considering the size of the most suitable collection box or packing box which is necessary for the worker, it is effective as a packing work support method. However, since the calculation is performed depending on the volume, when the size of the commodities exceeds any one of the width, the depth, or the height of the collection box or the packing box, the commodities may not be in.

The difficulty of performing the packing work in the state in which it is not known what kind of and how many commodities are necessary to be stored is not solved.

### Solution to Problem

In a first aspect, the invention provides a work support device as set out in claim 1 and a work support method as set out in claim 12. An example of the representative ones for solving the problems described above are as follows. That is, a work support device which supports a work of storing a plurality of articles of a plurality of types in a packing box, includes: a processor; a storage unit; a display unit; and an instruction information reading unit, in which the storage unit holds at least a size of the articles of each type, the instruction information reading unit reads work instruction information for instructing a packing work of storing the article in the packing box, the processor acquires a quantity and a size of the articles of each type to be stored in the packing box based on the work instruction information and information held in the storage unit, and generates a support image that overlooks a three-dimensional space in which a figure, in which the sizes of the articles of each type to be stored in the packing box are reduced at a same scale, is arranged in a predetermined direction from a predetermined reference position, according to an indication order of the article of each type based on a predetermined rule, for a quantity of each type to be stored in the packing box, and the display unit displays the support image.

### Advantageous Effect

According to the invention, it is possible to improve the work efficiency by providing the work support device with an excellent usability. Problems, configurations, and effects other than those described above will become apparent from the description of the embodiments below.

### Brief Description of Drawings

[FIG. 1A] FIG. 1A is a block diagram showing a work support device according to a first embodiment of the invention.
[FIG. 1B] FIG. 1B is a block diagram showing a hardware configuration of the work support device according to the first embodiment of the invention.
[FIG. 2] FIG. 2 is an illustrative diagram showing support indication content according to the first embodiment of the invention.
[FIG. 3] FIG. 3 is a flowchart showing packing support processing according to the first embodiment of the invention.
[FIG. 4] FIG. 4 is an illustrative diagram showing an example of support instruction information created in the first embodiment of the invention.
[FIG. 5] FIG. 5 is an illustrative diagram showing support instruction content according to a second embodiment of the invention.
[FIG. 6] FIG. 6 is an illustrative diagram showing another example of the support instruction content according to the second embodiment of the invention.
[FIG. 7] FIG. 7 is a flowchart showing packing support processing according to the second embodiment of the invention.
[FIG. 8] FIG. 8 is a flowchart showing the packing support processing according to the second embodiment of the invention.
[FIG. 9] FIG. 9 is an illustrative diagram of an example of support instruction information related to a packing box according to the second embodiment of the invention.
[FIG. 10] FIG. 10 is an illustrative diagram showing a first variation of the support instruction content according to the second embodiment of the invention.
[FIG. 11] FIG. 11 is an illustrative diagram showing a second variation of the support instruction content according to the second embodiment of the invention.
[FIG. 12] FIG. 12 is a flowchart showing work support processing according to the second embodiment of the invention.
[FIG. 13] FIG. 13 is a block diagram showing a work support device according to a third embodiment of the invention.
[FIG. 14] FIG. 14 is an illustrative diagram showing support indication content according to the third embodiment of the invention.
[FIG. 15] FIG. 15 is a flowchart showing display switching processing according to the third embodiment of the invention.
[FIG. 16] FIG. 16 is an illustrative diagram showing the support display content related to an object to be packed that should be stored on a bottom surface according to the third embodiment of the invention.
[FIG. 17] FIG. 17 is an illustrative diagram showing the support indication content for making a part of the object to be packed translucent according to the third embodiment of the invention.
[FIG. 18] FIG. 18 is an illustrative diagram showing support instruction information when packing indication is performed according to the third embodiment of the invention.
[FIG. 19A] FIG. 19A is a block diagram showing a work support device according to a fourth embodiment of the invention.
[FIG. 19B] FIG. 19B is a block diagram showing a hardware configuration of a work support device according to the fourth embodiment of the invention.
[FIG. 20] FIG. 20 is an illustrative diagram showing a first example of support instruction content according to the fourth embodiment of the invention.
[FIG. 21A] FIG. 21A is an illustrative diagram showing a second example of the support instruction content according to the fourth embodiment of the invention.
[FIG. 21B] FIG. 21B is an illustrative diagram showing a third example of the support instruction content according to the fourth embodiment of the invention.
[FIG. 22] FIG. 22 is a flowchart showing work instruction processing according to the fourth embodiment of the invention.
[FIG. 23] FIG. 23 is a flowchart showing a first processing of a work instruction when the worker performs a work different from an instruction according to the fourth embodiment of the invention.
[FIG. 24] FIG. 24 is a flowchart showing a second processing of the work instruction when the worker performs the work different from the instruction according to the fourth embodiment of the invention.
[FIG. 25] FIG. 25 is a flowchart showing processing of guiding a movement of an object to be packed to an original position after the temporary storage is performed according to the fourth embodiment of the invention.
[FIG. 26] FIG. 26 is an illustrative diagram showing an example of a display screen that instructs a temporary storage location according to the fourth embodiment of the invention.
[FIG. 27] FIG. 27 is an illustrative diagram showing an example of the display screen when a movement from a temporary storage position to an original position is instructed according to the fourth embodiment of the invention.
[FIG. 28] FIG. 28 is a flowchart showing processing of acquiring and storing information such as the size of an object to be packed by a work support device according to a fifth embodiment of the invention.
[FIG. 29] FIG. 29 is a flowchart showing processing of determining color information at the time of generating support instruction information by the work support device according to the fifth embodiment of the invention.
[FIG. 30] FIG. 30 is an illustrative diagram showing a third variation of the support instruction content according to the second embodiment of the invention.

### Description of Embodiments

Embodiments of the invention will be described below using the drawings.

### [First Embodiment]

First, a first embodiment of a packing support method according to the invention will be described. In the first embodiment, the work efficiency can be improved by performing the packing work without switching the storage position of an object to be packed.

First, the basic operation of the work support device according to the present embodiment will be described.

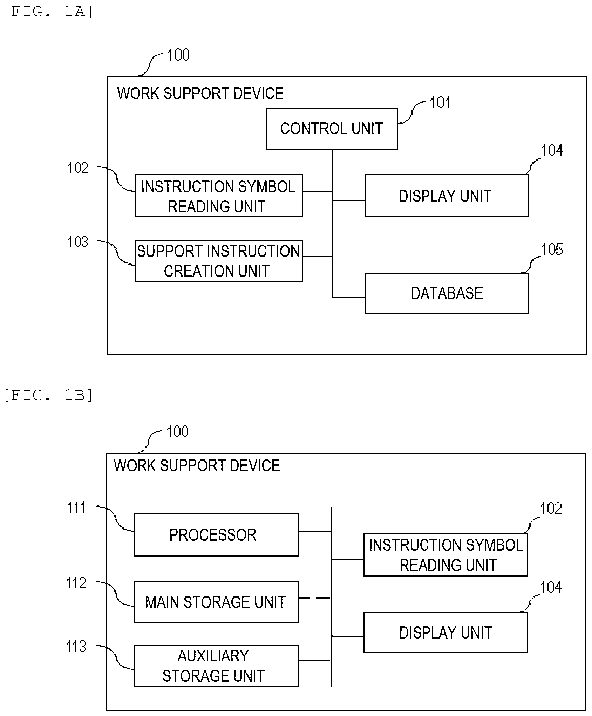

FIG. 1A is a block diagram showing a work support device according to the first embodiment of the invention.

The work support device 100 includes a control unit 101, an instruction symbol reading unit 102, a support instruction creation unit 103, and a display unit 104, and holds a database 105.

The control unit 101 controls the entire work support device. The instruction symbol reading unit 102 reads at least one of a work instruction symbol associated with work content to be performed by the worker from now and a symbol unique to the object to be packed that is printed on the object to be packed (that is, the article to be packed in a packing box). The support instruction creation unit 103 creates instruction information for displaying an instruction to the worker. The display unit 104 performs display based on support instruction information created by the support instruction creation unit 103.

The database 105 holds information such as work information performed by the worker and size information of the object to be packed.

FIG. 1B is a block diagram showing a hardware configuration of the work support device according to the first embodiment of the invention.

The work support device 100 has a processor 111, a main storage unit 112, an auxiliary storage unit 113, the instruction symbol reading unit 102, and the display unit 104 connected to each other.

The processor 111 controls each unit in the work support device 100 according to a program stored in the main storage unit 112 to realize various processing such as packing support processing to be described later. Specifically, the processing of the control unit 101 and the support instruction creation unit 103 is actually executed according to the program stored in the main storage unit 112 by the processor 111.

The main storage unit 112 is, for example, a storage device such as a semiconductor memory, and stores a program executed by the processor 111, data referred to by the processor 111, and the like. In addition, data created by the processor 111 is also stored in the main storage unit 112, such as support instruction information and support instruction content to be described later.

The auxiliary storage unit 113 is, for example, a storage device such as a hard disk drive or a flash memory device, and stores data referred to by the processor 111 and the like. For example, the database 105 may be stored in the auxiliary storage unit 113, and at least part of the database 105 may be copied to the main storage unit 112 as necessary. The program executed by the processor 111 may also be stored in the auxiliary storage unit 113, and at least part of the program may be copied to the main storage unit 112 as necessary. At least part of the data stored in the main storage unit 112 by the processor 111 may be stored in the auxiliary storage unit 113 as necessary.

The instruction symbol reading unit 102 is an input device for reading work instruction symbols, and may be, for example, a barcode reader, or a camera. The instruction symbol reading unit 102 may include an input device such as a keyboard when it is necessary to input, for example, characters or numbers, or may include an input device such as a mouse, when it is necessary to operate, for example, a button on a screen to be described later.

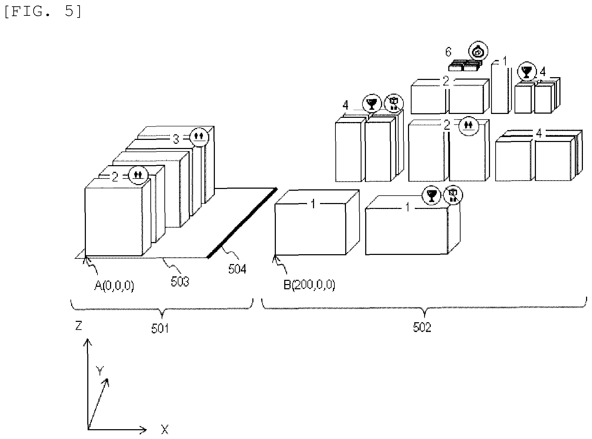

The display unit 104 is an output device that displays an image of the support instruction content (for example, FIG. 5) to be described later.

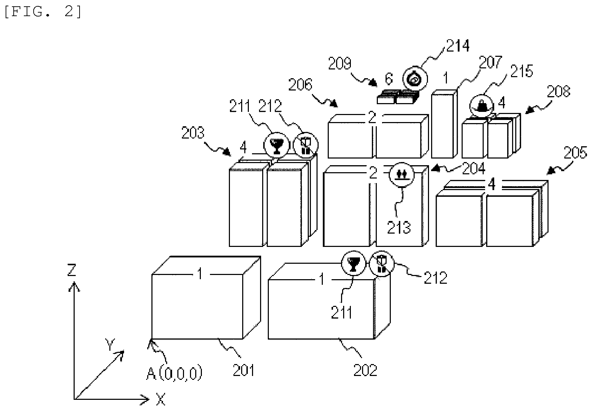

FIG. 2 is an illustrative diagram showing support indication content according to the first embodiment of the invention.

For example, all of the objects to be packed are arranged once on the workbench such that the worker knows in advance what kind of the objects to be packed is. Similarly, in FIG. 2, the size of the objects to be packed is reduced on a matching scale to collectively display the objects to be packed for each type (that is, item) thereof in an overlooking way such that the worker knows the size and the amount of the objects to be packed.

Further, the number of the objects to be packed for each type and the characteristic information to be taken caution at the time of packing a box, such as "broken object" and "this side up" are displayed.

Indication content shown in FIG. 2 will be described in detail later.

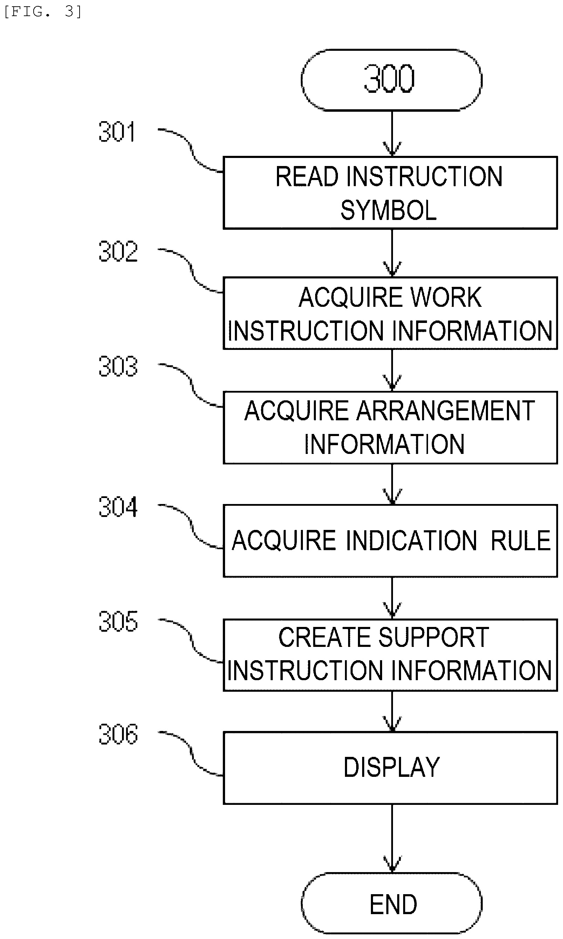

FIG. 3 is a flowchart showing the packing support processing according to the first embodiment of the invention.

In FIG. 3, in step 301, the instruction symbol reading unit 102 reads the work instruction symbol printed on a work instruction manual for instructing the packing work. The work instruction manual is, for example, for associating the type of the objects to be packed that should be packed with work instruction information such as the number of the object to be packed that should be packed and the destination of the packing box in which the object to be packed after packing is stored. The work instruction symbol printed on the work instruction manual may be, for example, a barcode or a two-dimensional barcode, or may be a unique numerical value or a type of photograph that can correspond to the work instruction information one to one. In addition to the work instruction information, the database 105 stores, the size including the width, height, and depth of the object to be packed, the weight of the object to be packed, and the characteristic information of the object to be packed that should be taken caution at the time of packing.

In step 302, based on the acquired work instruction symbol, the control unit 101 acquires work instruction information such as the type and the number of the objects to be packed that should be packed from the database 105.

In step 303, based on the acquired work instruction information, the control unit 101 acquires arrangement information such as the size, weight, and characteristics of the object to be packed from the database 105.

Next, in step 304, the control unit 101 acquires an indication rule that stands for in what order the objects to be packed are indicated at the time of display. This may be determined in advance by the work support device 100 or may be set individually by the worker. The indication rule shows, for example, rules including "weight order", "volume (capacity) order", "ascending order or descending order of the number of objects to be packed", "collection order or packing order of objects to be packed", "ascending order or descending order of any one of the width, height and depth of objects to be packed" or "characteristic order of objects to be packed". However, the indication rule may be a rule other than those described above, as long as the indication order of the objects to be packed can be determined based on the indication rule.

For example, by arranging in the weight order, it becomes easy to work such as disposing heavy objects to be packed in a lower part of the packing box, and light objects to be packed in an upper part of the packing box. By arranging in the volume order, for example, it becomes easy to work such as storing large-sized objects to be packed first in the packing box and storing small-sized objects to be packed in a remaining space. By arranging in the order of the number of the objects to be packed, for example, it becomes easy to work such as storing a large number of objects to be packed of the same type first in the packing box and storing a small number of objects to be packed in the remaining space.

The collection order of the objects to be packed is the order in which picking is performed, for example, when a picked article is packed in the packing box. The collection order is generated based on, for example, the work instruction information and stored in the database 105. In addition, the packing order of the objects to be packed is the storage order when the arrangements of the objects to be packed in the packing box and the storage order in the respective arrangements are calculated as will be described later. By arranging the objects to be packed in this order, it is possible to support the work along the actual flow.

By arranging the objects to be packed in the order of at least one of the width, the height and the depth of the objects to be packed, it becomes easy to work such as storing the object to be packed with a small degree of freedom of arrangement in the packing box first, such as a wide object, and storing the other objects to be packed later. By arranging the objects to be packed in the order of the characteristics (for example, broken object and this side up) of the object to be packed, oversight of the caution items is prevented.

The indication rule described above may be applied alone, but a combination of a plurality of indication rules may be applied. For example, objects to be packed may be arranged in the weight order, and the objects to be packed of the same weight may be arranged in the volume order.

In step 305, the support instruction creation unit 103 creates the support instruction information including indication position coordinates of the object to be packed and characteristic indication information of the object to be packed according to the acquired indication rule above. Here, in the indication position coordinates, the arrangement reference position on the screen, for example, point A (0, 0, 0) shown in FIG. 2 is taken as the origin. With the object to be packed of the same items in one place, the indication position of the object to be packed is set according to the indication rule. When the object to be packed is displayed, the support instruction creation unit 103 may arrange figures simulating the shape of the object to be packed in one direction, may have a function of scrolling the screen when all of the objects to be packed do not fit within one screen, and may create the support instruction information so as to confirm the entirety. Alternatively, the support instruction creation unit 103 may create the support instruction information, in which the objects to be packed that do not fit within the screen when arranged in one direction are arranged in a later stage, by folding the indication position of the objects to be packed at a screen edge such that all of the objects to be packed can fit within the screen without scrolling.

In step 306, the display unit 104 performs the display shown in FIG. 2 using the created support instruction information.

FIG. 2 shows an example of an indication screen in which figures simulating the shape of 10 types of objects to be packed are arranged in any indication rule (for example, "weight order") as a result of the processing described above. For example, a figure 201 showing an object to be packed at a highest position in the indication order is displayed at the point A (0, 0, 0) which is the reference position. The figure 201 simulates the shape of the object to be packed, and is, for example, a perspective view of a three-dimensional shape in which the size of the object to be packed is reduced at a predetermined scale. The figure 201 may be a reduced figure that faithfully simulates the shape of the corresponding object to be packed, or may be abstracted or simplified as, for example, a reduced rectangular parallelepiped of the same size as the object to be packed. The figure 201 is also simply described as the object to be packed 201. The same applies to other objects to be packed. The number "1" displayed on the object to be packed 201 is the number of the objects to be packed for each type, and shows that only one type of the object to be packed 201 is packed. Therefore, only one figure 201 is displayed.

Further, an object to be packed 202 at a second position in the indication order is displayed on a point moved (shifted) from the point A in an X direction. It is necessary for the amount of the movement to be larger than the size of the figure showing the object to be packed 201 in the X direction. That is, the indication position of the object to be packed 202 is a position shown by a coordinate value obtained by adding a value larger than the size of the object to be packed 201 in the X direction to an X coordinate value of the point A (0, 0, 0). Further, in the example in FIG. 2, the number "1" showing the number of the objects to be packed of the type of the object to be packed 202, an icon 211 showing the characteristic information that the object to be packed 202 is a broken object, and an icon 212 showing the characteristic information that the object to be packed 202 is prohibited to be stacked are displayed.

Similarly, the objects to be packed 203 to 209 at a third position or after in the indication order are also sequentially displayed at a position moved from the indication position of the higher rank object to be packed in any direction. However, for example, when the moved indication position is out of the display range of the screen and the like, the indication position may be determined as it is, and it may be possible to display by scrolling the screen and the like, but a moving direction of the indication position may be changed such that the display can be performed without scrolling.

In the example in FIG. 2, an object to be packed 203 at a third position in the indication order is displayed not at a position moved further from the indication position of the object to be packed 202 in the X direction, but is displayed at a position moved from the indication position of the object 201 to be packed in a Y direction. In this case, the movement amount is larger than the size of the figure showing the object to be packed 201 in the Y direction. In addition, in this example, since four objects to be packed 203 are packed (that is, four articles of the same type are packed), four objects to be packed 203 are displayed, and the number showing the number "4" is displayed. Further, icons 211 and 212 showing the characteristic information related to the object to be packed 203 are displayed.

Further, in the example in FIG. 2, two objects to be packed 204 at a fourth position in the indication order are displayed at positions moved from the indication position of the object to be packed 203 in the X direction. In the example in FIG. 2, since four objects 203 to be packed are arranged in two rows in the X direction and two rows in the Y direction, the distance from the indication position of the object to be packed 203 to the indication position of the object to be packed 204 is larger than twice the size of the object to be packed 203 in the X direction.

Similarly, the number of objects to be packed 205 to 209 that is to be packed respectively is displayed at positions moved from the indication position of the objects to be packed at the higher position in the indication order only by the necessary amount in the X direction or the Y direction. In addition, as necessary, the icon showing the characteristic information, for example, an icon 213 showing this side up, an icon 214 showing that the objects are together in a bag, and an icon 215 showing heavy object are displayed for the respective objects to be packed.

In the example in FIG. 2, as described above, the indication positions of the objects to be packed are moved in the X direction according to the indication order, and also moved in the Y direction as necessary, but this is an example of association between the indication order and the indication position, and another association may be adopted. For example, the indication positions of each object to be packed may be moved in the Y direction according to the indication order, and may be moved in the X direction as necessary.

In the example in FIG. 2, a two-dimensional figure in which the perspective view of a three-dimensional figure obtained by converting (for example, reducing) the size of each object to be packed at the predetermined scale is displayed. This is an example of a method of displaying an image that overlooks a three-dimensional space in which three-dimensional figures corresponding to each object to be packed are arranged, and another display method may be adopted. However, it is desirable that the three-dimensional shape of each object to be packed is easy to grasp, and the difference in shape and size between different types of the objects to be packed is easily grasped. For example, a two-dimensional image may be displayed overlooking the three-dimensional space from a predetermined viewpoint in which the three-dimensional figures obtained by converting the sizes of each object to be packed at the predetermined scale are arranged. When a perspective is used when the two-dimensional image that overlooks the three-dimensional space is generated, even if the scales of the figures corresponding to each article in the three-dimensional space are the same, the scales of each article in the two-dimensional image overlooking it may be different from each other. Specifically, the reduction ratio on the two-dimensional image of the figures arranged at a close position from the viewpoint in the three-dimensional space is smaller than that of the figures arranged at a distant position.

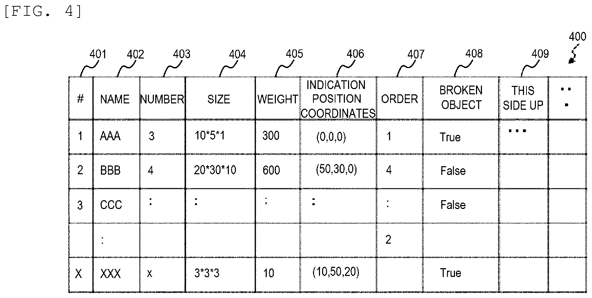

FIG. 4 is an illustrative diagram showing an example of the support instruction information created in the step 305 of the first embodiment of the invention.

A support instruction information 400 includes, for example, an ID information 401 for identifying each record of the support instruction information 400, a name 402 of the object to be packed, a number 403, a size 404, a weight 405, a position coordinate 406 for displaying the object to be packed, an order 407 of packing, and information (for example, a broken object 408 and this side up 409) related to the caution items of packing. These are examples of information to be used for display, and may further include other information as necessary, or may omit unnecessary portions.

The name 402 identifies the object to be packed. The same type of the objects to be packed is identified by the same name 402. The number 403 is the number of the objects to be 24 packed for each type. With regard to the size 404, the size of the original object to be packed is set to a size reduced by a predetermined ratio. The ratio to be reduced may be determined in advance by the work support device, and may be determined according to the size of the screen of the display unit 104, or may be set individually by the worker.

The weight 405 is the weight of each object to be packed. Indication position coordinates 406 are coordinates showing a position at which each object to be packed is displayed. More specifically, as shown in FIG. 2, for example, the indication position coordinates 406 are coordinates of indication positions of each figure in a (virtual) three-dimensional space in which the figures simulating the shapes of each object to be packed are arranged. This coordinates are determined, for example, by the method described with reference to FIG. 2.

With regard to the caution items for packing such as the broken object 408 and this side up, True is stored when the caution items on the packing applies such as the object to be packed is a broken object, and False is stored when it does not apply. The caution items include "broken object", "this side up", "together in bag", or "wrap with cushioning material", but are not limited to these as long as they are caution items at the time of packing.

In addition, the support instruction information 400 may be in the form illustrated in FIG. 4, or may be converted into, for example, information in HTML format that can be displayed by a Web browser, but it is not limited to these, and further may be another format.

In this way, before work, by displaying the size and the number of the objects to be packed that should be stored not only with the character information but also displaying the figures that simulates the shape of the objects to be packed visually and in the overlooking way, it becomes easy to make a storing plan such as which commodity is stored at which position. When the work is performed without planning an appropriate storing plan, for example, even though there is space remaining in the packing box, not all of the objects to be packed can be in, and once the object to be packed which is stored may be taken out and switched to another storage position, the work efficiency is reduced as a result. According to the present embodiment, by supporting the planning of the storing plan, it is possible to prevent the storage position of the objects to be packed from being switched, and the work efficiency can be improved.

### [Second Embodiment]

Next, a second embodiment related to a packing support method according to the invention will be described. In the second embodiment, the work efficiency can be improved by performing the packing work without switching the storage position of an object to be packed. Except for the differences described below, since each unit of the system according to the second embodiment has the same functions as those of each unit denoted by the same reference numerals of the first embodiment shown in FIGS. 1A to 4, the description thereof will be omitted.

The configuration and basic operation of the work support device 100 according to the present embodiment are the same as those of the first embodiment (see FIGS. 1A and 1B).

FIG. 5 is an illustrative diagram showing support instruction content according to the second embodiment of the invention.

In FIG. 5, when the object to be packed is displayed in the overlooking way, the indication positions are different according to the storage positions of the objects to be packed in the packing box (that is, the storage positions scheduled in the packing box in which the objects to be packed are to be stored from now). Specifically, the work support device 100 displays the object to be packed that should be stored on a bottom surface (that is, a lowermost part) of the packing box in a predetermined area 501. Further, the work support device 100 displays the objects that does not ground on the bottom surface of the packing box, to be packed that should be stored at a second or higher tier counted from the bottom surface in an area 502 different from the area 501. In the example in FIG. 5, the area 501 is disposed on a left side and the area 502 is disposed on a right side, but this arrangement is an example, and any arrangement may be used as long as the respective arrangements are determined in advance. In this way, by displaying the objects to be packed that should be stored on the bottom surface separately from other objects to be packed, the worker can easily recognize the objects to be packed that should be stored in the packing box first, and it is possible to prevent the objects to be packed from being stored in the wrong order and prevent the objects to be packed from being switched as a result.

Further, with regard to the object to be packed that should be stored on the bottom surface, the storage position in the packing box can be instructed in more detail. In the example in FIG. 5, a bottom surface 503 of the packing box is displayed in the area 501, and each object to be packed is displayed on the position where it should be stored on the bottom surface 503. Specifically, the figures of the objects to be packed are arranged according to the arrangement in the packing box of each object to be packed calculated as described later. Further, a highlighted indication 504 is displayed that shows a long side surface direction of the packing box. As shown in FIG. 5, the highlighted indication 504 may be a thick line parallel to the long side surface direction, or may include a character such as a "long side surface direction".

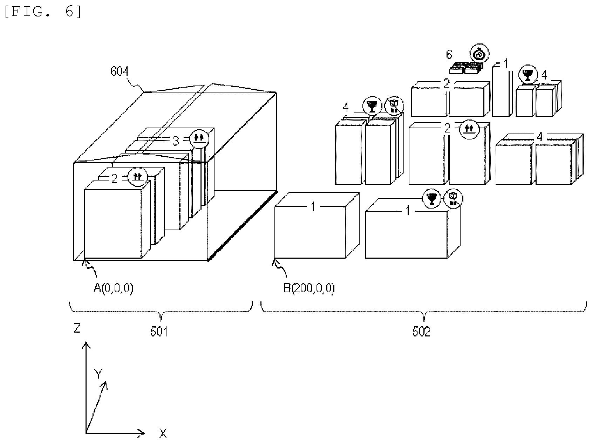

FIG. 6 is an illustrative diagram showing another example of the support instruction content according to the second embodiment of the invention.

In the example in FIG. 6, an appearance 604 that includes a lid of the packing box is displayed. As a result, the long side surface direction of the packing box is shown. However, the method of showing the long side surface direction is not limited to these. For example, both the highlighted indication 504 and the appearance 604 of the packing box may be displayed together. As a result, the orientation of the packing box actually working by the worker and the orientation of the packing box included in the support instruction content can be associated with each other without errors. Wrong packing work can be prevented, and it is possible to prevent the objects to be packed from being switched as a result.

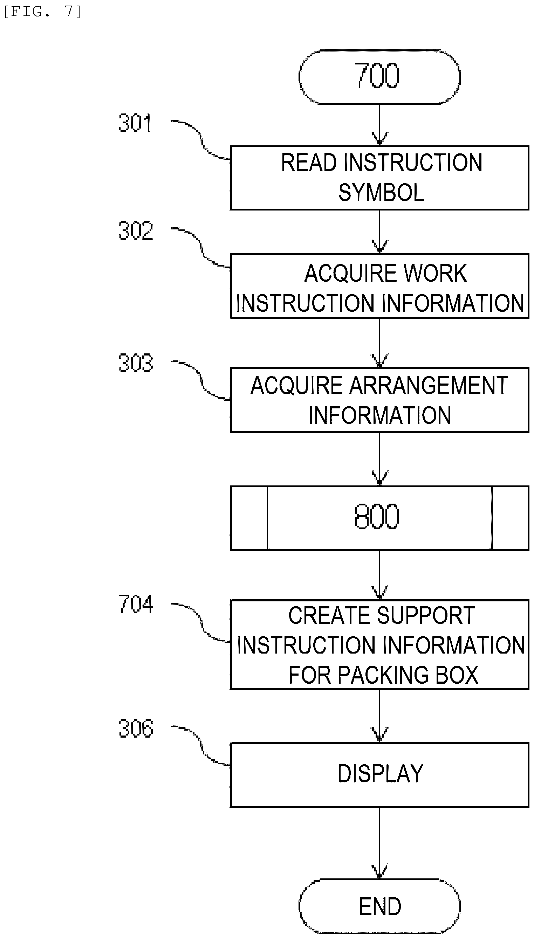

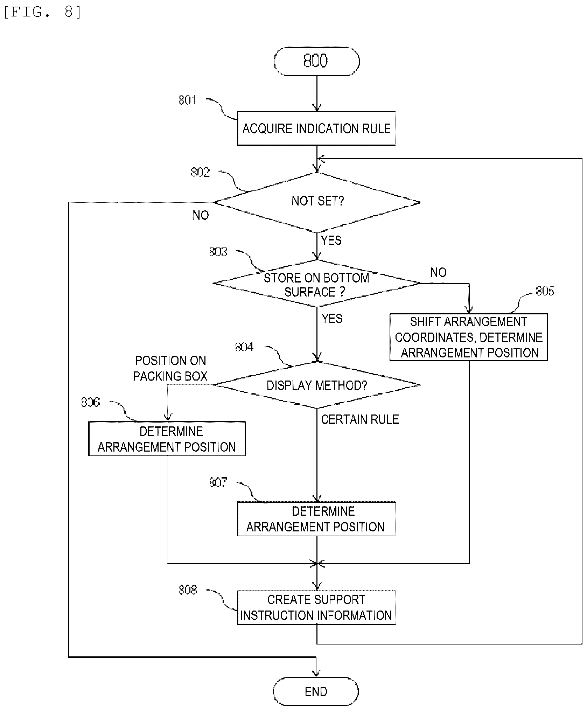

FIGS. 7 and 8 are flowcharts showing packing support processing according to the second embodiment of the invention.

In step 301, the instruction symbol reading unit 102 reads a work instruction symbol printed on a work instruction manual for instructing the packing work. In step 302, based on the acquired work instruction symbol, the control unit 101 acquires work instruction information such as the type and the number of objects to be packed that should be packed from the database 105.

In step 303, based on the acquired work instruction information, the control unit 101 acquires arrangement information such as the size, weight, and characteristics of the object to be packed from the database 105. Here, the arrangement information includes arrangement position coordinates of the objects to be packed in the packing box calculated from the size and the number of the objects to be packed in advance. Alternatively, the control unit 101 may calculate the arrangement position of the objects to be packed in the packing box from the size of the packing box and the size and the number of the objects to be packed. In addition, the control unit 101 may calculate the order 407 of packing of the objects to be packed based on the arrangement positions of the respective types of the objects to be packed thus calculated. Since such a calculation can be realized by a related known method, the detailed description thereof is omitted here.

In step 800, the support instruction creation unit 103 creates support instruction information. This processing will be described later with reference to FIG. 8.

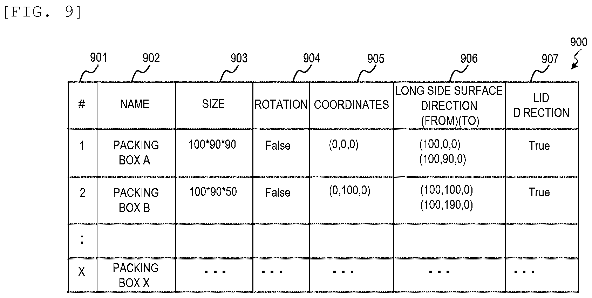

In step 704, the support instruction creation unit 103 creates the support instruction information for displaying at least one of a bottom surface 503 of the packing box and the appearance 604 of the packing box. This is, for example, position information on the display for highlighting the bottom surface and the long side surface of the packing box as shown in FIG. 9 (details will be described later).

Finally, in step 306, the display unit 104 performs the display shown in FIG. 5 or 6 using the created support instruction information.

The support instruction information creation flow shown in step 800 will be described with reference to FIG. 8. In step 801, the control unit 101 acquires an indication rule that indicates in what order the objects to be packed are displayed at the time of display. This may be determined in advance by the work support device or may be set individually by the worker.

Next, in step 802, the support instruction creation unit 103 refers to the arrangement information of the objects to be packed acquired in step 303, and confirms whether the objects to be packed in which the arrangement position (that is, the indication position coordinates 406) is not determined remains. When no object to be packed in which the arrangement position is not determined remains, the processing ends, and if not, the processing proceeds to step 803.

In step 803, the support instruction creation unit 103 selects one of the objects to be packed in which the arrangement position is not determined, and confirms whether the selected object to be packed is to be stored on the bottom surface of the packing box. If the selected object to be packed is to be stored on the bottom surface of the packing box, the processing proceeds to step 804, and if it is to be stored at the second or higher tier, the processing proceeds to step 805.

In step 804, the support instruction creation unit 103 confirms whether the objects to be packed are displayed at the storage position (that is, the arrangement position in the packing box calculated in step 303) in the packing box or the objects to be packed are displayed according to a certain rule (for example, weight order). The work support device 100 may determine which display to perform, or the worker may determine and set which display to perform in advance. When the display is performed at the storage position in the packing box, the processing proceeds to step 806, and when the display is performed according to the certain rule, the processing proceeds to step 807.

Since it is stored at the second or higher tier in step 805, when the point A (0, 0, 0), for example, are shown in FIG. 5, is taken as the arrangement reference position, in order to display the indication position of the object to be packed at the second or higher tier in the area 502, the support instruction creation unit 103 shifts the arrangement reference position in a right direction (that is, the X direction), takes a point B (200, 0, 0) as the arrangement reference position, and determines the indication position coordinates of the object to be packed according to the indication rule based on the present position.

In step 806, the support instruction creation unit 103 determines the arrangement reference position on the bottom surface of the packing box for displaying the objects to be packed arranged on the bottom surface at the storage position in the packing box. Specifically, the support instruction creation unit 103 takes, for example, the point A (0, 0, 0) as the arrangement reference position, and determines the indication coordinates to be arranged at the actual storage position of each object to be packed.

In step 807, the support instruction creation unit 103 determines the arrangement reference position for displaying the objects to be packed arranged on the bottom surface according to the indication rule. Specifically, the support instruction creation unit 103 takes, for example, the point A (0, 0, 0) as the arrangement reference position, and determines the indication coordinates according to the indication rule of the arrangement position of each object to be packed.

In step 808, the support instruction creation unit 103 creates the support instruction information that includes the indication coordinates of the object to be packed, the characteristic indication information of the object to be packed, and the like, and the processing returns to step 802.

FIG. 9 is an illustrative diagram of an example of the support instruction information related to the packing box according to the second embodiment of the invention.

A support instruction information 900 includes ID information 901, a name 902 of the packing box, a size 903 of the packing box, a presence or absence of rotation 904 when the packing box is displayed, an indication coordinate position 905, coordinates 906 that forms sides of the bottom surface of the packing box to show the long side surface direction, a lid direction 907 that shows a relation between the lid and the long side surface of the packing box. However, FIG. 9 is an example, and it is not limited to this as long as the information is for displaying the packing box.

The presence or absence of rotation 904 when the packing box is displayed shows rotation in directions of the width and depth of the packing box. True is set when the rotation is performed, and False is set when the rotation is not performed. In the lid direction 907 that shows the relation between the lid of the packing box and the long side surface, True is set when the long side surface direction and the direction to open the lid are the same, and False is set when they are different. The method of designating the rotation of the packing box is not limited to this, and the size of the object to be packed that is registered in the size 903 may be corrected according to whether the packing box is rotated. In addition, according to the amount of the object to be packed, one or two or more packing boxes may be used.

The method described above is an example of holding information that shows the relation between the long side surface direction of the packing box and the opening and closing directions of the lid of the packing box, and making the worker recognize the long side surface direction of the packing box by showing the opening and closing directions of the lid of the packing box according to the information, and another method may be adopted. As a result, this makes it possible for the worker to correctly recognize the orientation of the packing box.

Next, a variation of the display method in FIG. 5 will be described.

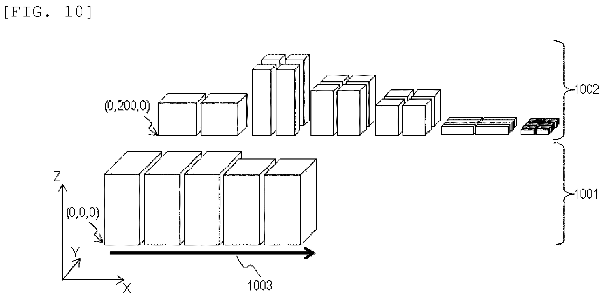

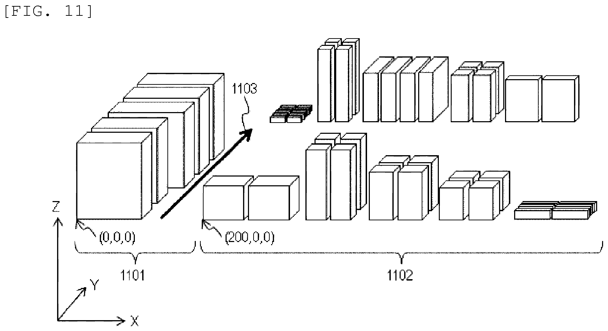

FIGS. 10 and 11 are illustrative diagrams showing a first variation and a second variation of the support instruction content according to the second embodiment of the invention, respectively.

When the number of types of the objects to be packed that should be displayed is increased, it becomes difficult for all of the objects to be packed to fit within the display screen. It is possible to fit all of the objects to be packed within the display screen by reducing the reduction ratio of the displayed objects to be packed, but the objects to be packed become small and difficult to see, respectively. Therefore, when the objects to be packed that is to be stored on the bottom surface and the objects to be packed that is to be stored at the second or higher tier are displayed separately, the display screen is effectively used by changing the arrangement reference position of the indication position of the objects to be packed, which are stored in the direction of the bottom surface of the packing box and at the second or higher tier.

A case will be described when the aspect ratio of the display is longer in a horizontal direction (that is, in a left-right direction) than in a vertical direction (that is, in an up-down direction).

As shown in FIG. 10, when the number of types of the objects to be packed is small, the area on the screen is divided into two areas in a Y-axis direction. The objects to be packed that should be stored on the bottom surface are displayed at one area, and the objects to be packed that is to be stored at the second or higher tier are displayed at the other area. At this time, the long side surface direction of the packing box and an X-axis direction that matches with each other are displayed.

More specifically, as shown in FIG. 10, a case where a perspective view of a virtual three-dimensional space in which the figures corresponding to each object to be packed are arranged is displayed on the screen, which is a case where the X-axis direction of the three-dimensional space corresponds to the left-right direction of the screen, a Z-axis direction of the three-dimensional space corresponds to the up-down direction of the screen, and the Y-axis direction of the three-dimensional space corresponds to an upper-right direction that expresses a depth direction of the screen, will be described as examples. In this example, the three-dimensional space is divided into an area 1001 on a near side (that is, a Y coordinate value is smaller than a predetermined value) and an area 1002 on a back side (that is, the Y coordinate value is larger than the predetermined value) . On the screen, the area 1001 corresponds to a lower side, and the area 1002 corresponds to an upper side.

In this example, the objects to be packed that should be stored on the bottom surface of the packing box are displayed in the area 1001 in an arrangement that matches the storage position in the packing box. At this time, a direction 1003 of the long side surface of the packing box is displayed so as to match with the X-axis direction.

As shown in FIG. 11, when the number of types of the objects to be packed is large, the area on the screen is divided into two areas in the X-axis direction. The objects to be packed that should be stored on the bottom surface is displayed at one area, and the objects to be packed that is to be stored at the second or higher tier are displayed at the other area. At this time, the long side direction of the packing box and the Y-axis direction that matches with each other are displayed.

More specifically, when the correspondence between the virtual three-dimensional space and the screen is the same as in FIG. 10, the three-dimensional space is divided into an area 1101 on a left side (that is, an X coordinate value is smaller than a predetermined value) and an area 1102 on a right side (that is, the X coordinate value is larger than the predetermined value).

In this example, the objects to be packed that should be stored on the bottom surface of the packing box are displayed in the area 1101 in an arrangement that matches the storage position in the packing box. At this time, a direction 1103 of the long side surface of the packing box is displayed so as to match with the Y-axis direction.

When the aspect ratio of the display is opposite to that in this example (that is, the vertical direction is long), the axial direction to be divided into two and the axial direction matched with the long side surface direction are respectively opposite to the above example.

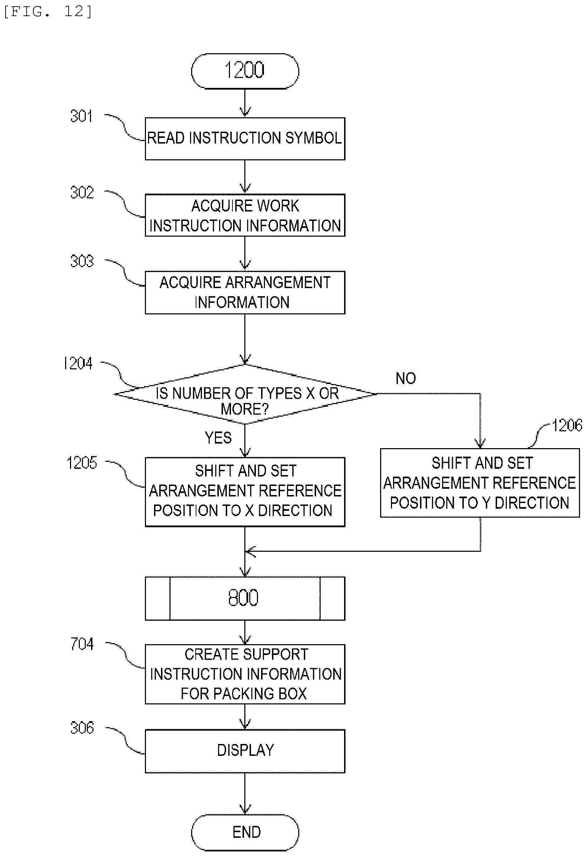

FIG. 12 is a flowchart showing work support processing according to the second embodiment of the invention.

Steps 301 to 303 are the same as those in FIG. 7. In step 1204, the support instruction creation unit 103 determines whether the number of commodity types is equal to or more than X. When it is less than X (step 1204: No), the processing proceeds to step 1206, and when it is equal to or more than X (step 1204: Yes), the processing proceeds to step 1205. The X number is the number of commodity types that can be displayed on one screen by a display method as shown in FIG. 10. An appropriate value may be set in advance according to the size of the screen of the display unit 104, the scale of the figures of the objects to be packed, and the like.

In step 1205, the support instruction creation unit 103 shifts the arrangement reference position of the indication coordinates of the objects to be packed that is to be stored at the second or higher tier to the division position in the X direction, and then the processing proceeds to step 800. For example, when the arrangement reference position of the indication coordinates of the objects to be packed that is to be stored on the bottom surface in FIG. 11 is (0, 0, 0) and the X coordinate value of the boundary between the area 1101 and the area 1102 is "200", the arrangement reference position of the indication coordinates of the objects to be packed that is to be stored at the second or higher tier is (200, 0, 0) shifted by 200 in the X direction from (0, 0, 0).

In step 1206, the support instruction creation unit 103 shifts the arrangement reference position of the indication coordinates of the objects to be packed that is to be stored at the second or higher tier to the division position in the Y direction, and then the processing proceeds to step 800. For example, when the arrangement reference position of the indication coordinates of the objects to be packed that is to be stored on the bottom surface in FIG. 10 is (0, 0, 0) and the Y coordinate value of the boundary between the area 1001 and the area 1002 is "200", the arrangement reference position of the indication coordinates of the objects to be packed that is to be stored at the second or higher tier is (0, 200, 0) shifted by 200 in the Y direction from (0, 0, 0).

In step 704, the support instruction creation unit 103 creates support instruction information for the packing box. Here, the direction of the packing box is to be matched with which one of the X axis or the Y axis is set by, for example, the presence or absence of rotation of the packing box.

Finally, in step 306, the display unit 104 performs display as shown in FIG. 10 or 11 based on the support instruction information created as described above.

Next, as a variation of the display method in FIG. 5, a display example is shown when two or more packing boxes are necessary for storing the objects to be packed in the packing box.

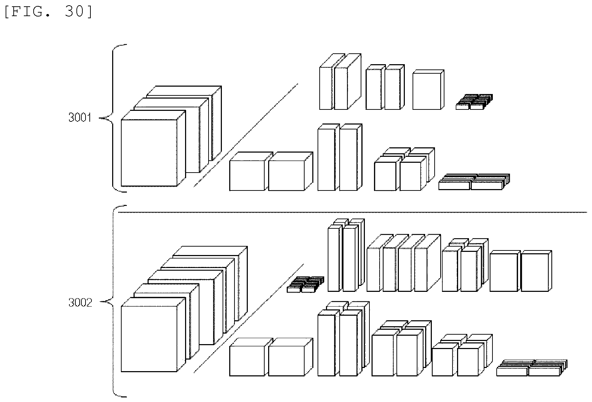

FIG. 30 is an illustrative diagram showing a third variation of the support instruction content according to the second embodiment of the invention.

When the objects to be packed is stored in a plurality of packing boxes, a plurality of display contents the same as those shown in FIG. 5 are displayed on the display screen. For example, the first packed object to be packed is displayed in a near area 3002 (a lower side on the screen), and the second 42 packed object to be packed is displayed in a back area 3001 (an upper side on the screen). When it is difficult to grasp all at a time on the display screen, by enlarging the display screen or shifting a display area, it can be confirmed as storage display in one packing box, similarly to the one shown in FIG. 5.

According to the method shown above, before work, by displaying the size and the number of the objects to be packed not only with the character information but also visually and in the overlooking way, and by knowing in advance the objects to be packed that should be stored on the bottom surface of the packing box, it becomes easy for the worker to make the storing plan such as which commodity is stored at which position, and it is possible to prevent the storage position of the objects to be packed from being switched, and the work efficiency can be improved.

### [Third Embodiment]

Next, a third embodiment related to a packing support method according to the invention will be described. In the third embodiment, the work efficiency can be improved by performing the work without switching the storage position of an object to be packed. Except for the differences described below, since each unit of the system of the third embodiment 43 has the same functions as those of each unit denoted by the same reference numerals of the first and second embodiments shown in FIGS. 1A to 12, and FIG. 30, and the description thereof will be omitted.

First, the basic operation of the work support device according to the present embodiment will be described.

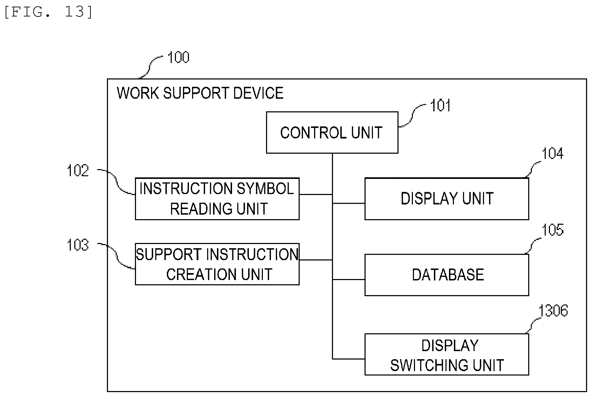

FIG. 13 is a block diagram showing the work support device according to the third embodiment of the invention.

The work support device 100 of the third embodiment holds a display switching unit 1306 in addition to the units shown in FIG. 1A. Since a hardware configuration of the work support device 100 according to the third embodiment is the same as that of the first embodiment, the description thereof will be omitted. The processing of the display switching unit 1306 is actually executed by the processor 111 according to a program stored in the main storage unit 112.

The basic operation of the work support device 100 of the third embodiment is the basic operation of the first embodiment to which the operation of switching display content by the display switching unit 1306 is added.

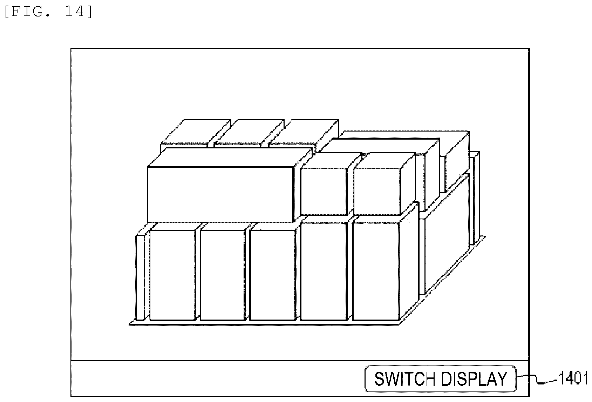

FIG. 14 is an illustrative diagram showing support display content according to the third embodiment of the invention.

In order for workers to know where to store the object to be packed in a packing box, the display unit 104 displays a packing indication screen in which figures of each object to be packed are reduced on a matching scale are arranged at the storage positions, respectively. Although not shown in FIG. 2, a display switching button 1401 is displayed on the screen, and the worker can switch between the overlooking display shown in FIG. 2 and the packing indication screen shown in FIG. 14 by operating the display switching button 1401.

Since the packing work starts with the worker storing the object to be packed on the bottom surface, for example, immediately after the work is started, the display unit 104 may display the objects to be packed that should be stored on the bottom surface among the objects to be packed that are displayed on the packing indication screen shown in FIG. 14, and may not display other objects.

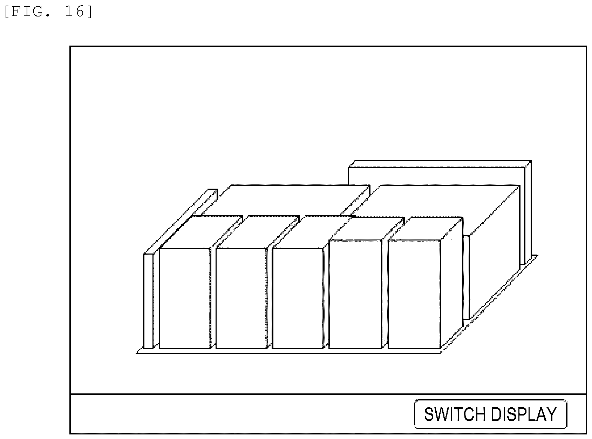

FIG. 16 is an illustrative diagram showing the support indication content related to the object to be packed that should be stored on a bottom surface according to the third embodiment of the invention.

The packing indication screen may be an indication screen in which all of the objects to be packed are stored as shown in FIG. 14, or may be an indication screen in which only a part of the objects to be packed are displayed, such as the objects to be packed that should be stored on the bottom surface, as shown in FIG. 16.

When it is desired to grasp the position of a specific object to be packed among all of the objects to be packed while holding an image that stores not only the objects to be packed that should be stored on the bottom but also all of the objects to be packed, the display unit 104 may display a display screen for displaying a part of the objects to be packed in a translucent manner.

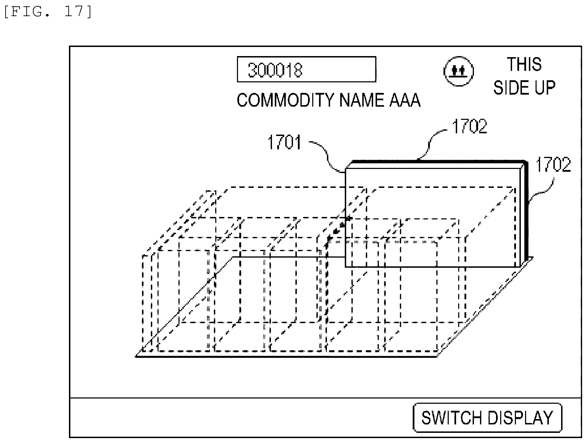

FIG. 17 is an illustrative diagram showing the support indication content for making a part of the objects to be packed translucent according to the third embodiment of the invention.

In the example in FIG. 17, a specific object to be packed 1701 is displayed as usual (in solid lines in FIG. 17), and a plurality of other objects to be packed are displayed in a translucent manner (in broken lines in FIG. 17). For example, by displaying the objects to be packed that are already stored in the packing box in a translucent manner, and next displaying the specific object to be packed 1701 that is to be stored in the packing box as usual, the worker can easily grasp the storage position of the object to be packed that is to be stored next.

Examples of a method of designating the specific object to be packed 1701 include reading a barcode printed on the object to be packed by the instruction symbol reading unit 102 and selecting the object to be packed displayed on the display unit 104, but the method is not limited to these, and any desired method may be adopted.

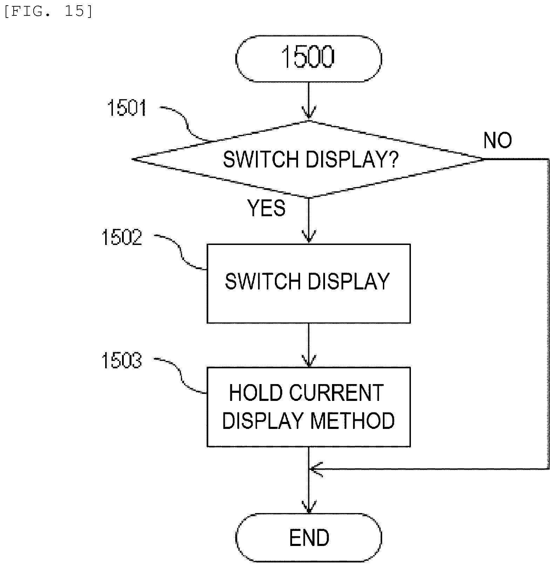

FIG. 15 is a flowchart showing display switching processing according to the third embodiment of the invention.

In step 1501, the display switching unit 1306 determines whether a display switching instruction is issued by the worker. A display switching method may be one by pressing the display switching button 1401 on the display screen or, for example, one by the voice of the worker, but is not limited to these. When there is a display switching instruction, the processing proceeds to step 1502, and when there is no display switching instruction, the processing ends.

In step 1502, the display switching unit 1306 switches to the indication content different the indication content held. In step 1503, the display switching unit 1306 holds the current display method. With regard to the switching of the indication content, the support instruction creation unit 103 may create support instruction information of the overlooking indication and the packing indication in advance. In step 1502, the display unit 104 may perform display according to an instruction of the display switching unit 1306, or the support instruction creation unit 103 creates support instruction information for each display switching instruction, and the display unit 104 may display it.

In addition, when the object to be packed (that is, the object to be packed in which another object to be packed is not stored between the object to be packed and any one of wall surfaces) stored in the position adjacent to an inner wall of the packing box is displayed as the object to be packed 1701 in FIG. 17, by adding a highlighted indication 1702 to a side of wall surface sides of the object to be packed, the object to be packed that is to be stored on the wall surface side is shown. By performing such a display, it is possible to prevent the worker from mistaking the storage position. In addition, the name (for example, "commodity name AAA") of the object to be packed and caution items (for example, "this side up") at the time of packing the object to be packed may be displayed.

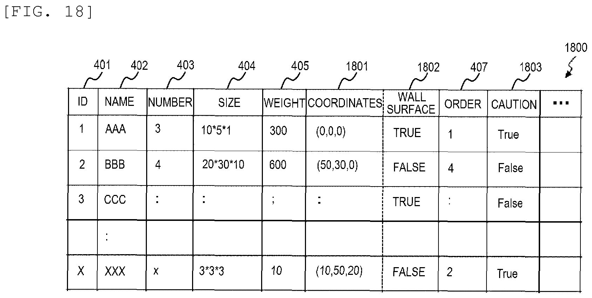

FIG. 18 is an illustrative diagram showing the support instruction information when packing indication is performed according to the third embodiment of the invention.

Support instruction information 1800 of the third embodiment includes, for example, the ID information 401, the name 402 of the object to be packed, the number 403, the size 404, the weight 405, a coordinate position 1801 of the object to be packed for displaying the object to be packed stored in the packing box, a flag 1802 that shows whether the object to be packed is adjacent to the wall surface, the order 407 of packing, and an information 1803 related to the caution items of packing. These are examples of information to be used for display, and may further include other information as necessary, or may omit unnecessary portions.

The flag 1802 is set to True when the object to be packed is adjacent to the wall surface, or False is set when it is not adjacent to the wall surface. Alternatively, the support instruction information 1800 may hold coordinates of a start point and an end point of the highlighted indication 1702 to be added on the screen for showing whether the object to be packed is adjacent to the wall surface. In addition, the information 1803 related to the caution items of packing is the same as the broken object 408 and this side up 409 shown in FIG. 4.

In this way, by switching between displaying the size and the number of the objects to be packed that should be stored not only with the character information but also visually and in an overlooking way and displaying which commodity is stored at which position, and showing the storage position, it is possible to work while imaging the type and the amount of the objects to be packed and the storage position, and it is possible to prevent the storage position of the objects to be packed from being switched, and the work efficiency can be improved.

### [Fourth Embodiment]

Next, a fourth embodiment related to a packing support method according to the invention will be described. In the fourth embodiment, by instructing an object to be packed by the worker and the order and the position of the object to be packed, it becomes unnecessary to switch the storage position of the object to be packed, and the work efficiency can be improved. Except for the differences described below, since each unit of the system of the fourth embodiment has the same functions as those of each unit denoted by the same reference numerals of the first to third embodiments shown in FIGS. 1A to 18, and FIG. 30, and the description thereof will be omitted.

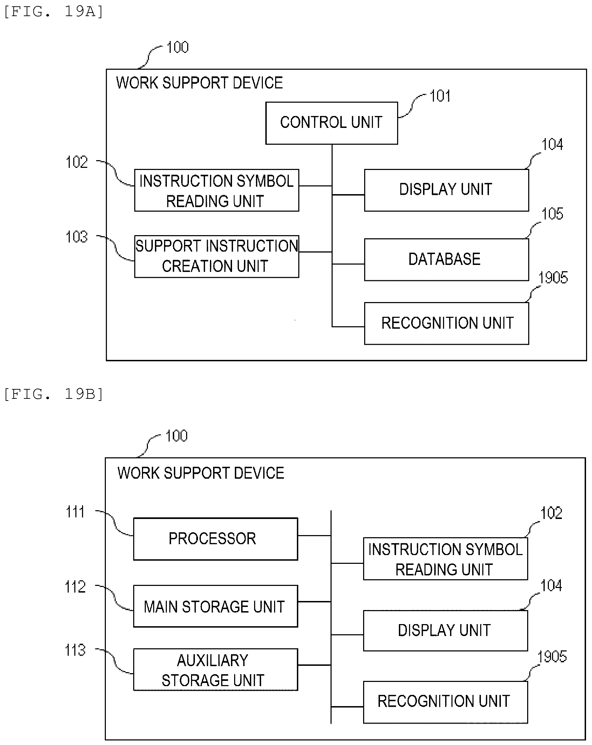

FIG. 19A is a block diagram showing a work support device according to the fourth embodiment of the invention.

As shown in FIG. 19A, the work support device 100 of the fourth embodiment is obtained by adding a recognition unit 1905 to the work support device 100 according to the first embodiment shown in FIG. 1A. The recognition unit 1905 recognizes at least one of the object to be packed that is held by the worker, the object to be packed that is stored by the worker, and the position of the object to be packed that is stored by the worker.

FIG. 19B is a block diagram showing a hardware configuration of the work support device according to the fourth embodiment of the invention.

The recognition unit 1905 may include a camera and the like, which may be used to recognize the object to be packed, or may include a weight scale and the like, which may be used to specify the individual object to be packed that is stored, or may recognize the object to be packed using a method other than the above.

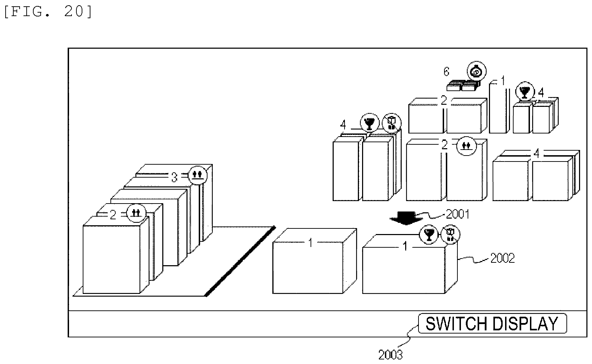

An example of a support instruction will be described with reference to FIGS. 20 to 21B. For example, the support instruction creation unit 103 may create support instruction content shown in FIGS. 20 to 21B, and the control unit 101 may display any one of them on the display unit 104 and switch the support instruction content to be displayed according to a switching instruction.

FIG. 20 is an illustrative diagram showing a first example of the support instruction content according to the fourth embodiment of the invention.

The support instruction content shown in FIG. 20 includes, in addition to the same support instruction content as in FIG. 5, an arrow 2001 that shows the object to be packed that should be stored next. In the work support device 100 according to the fourth embodiment, the worker is instructed the type and the position of the object to be packed next by highlighting using the arrow 2001.

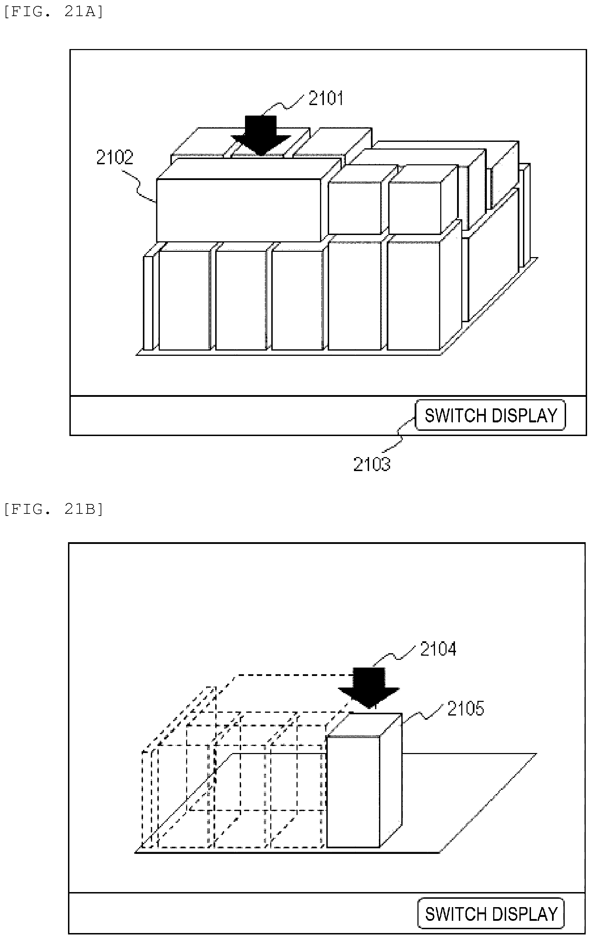

FIG. 21A is an illustrative diagram showing a second example of the support instruction content according to the fourth embodiment of the invention.

The support instruction content shown in FIG. 21 includes, in addition to the same support instruction content as in FIG. 14, an arrow 2101 that shows the storage position of the object to be packed that should be stored next in the packing box.

For example, an object to be packed 2002 highlighted by the arrow 2001 in FIG. 20 and an object to be packed 2102 highlighted by the arrow 2101 in FIG. 21A may be the same object to be packed. With reference to the support instruction content in FIG. 20, the worker confirms the size, the shape, the caution items, and the like of the object to be packed 2102 to be packed from now, and when a display switching button 2003 is operated, the screen switches to support instruction content in FIG. 21A. With reference to the support instruction content in FIG. 21A, the worker can confirm at which position the object to be packed 2102 should be stored in the packing box. After that, when the worker operates the display switching button 2103 as necessary, the support instruction content shown in FIG. 20 is displayed again.

When the recognition unit 1905 recognizes that the worker takes the object to be packed when the support instruction content as shown in FIG. 20 is displayed on the display unit 104, the control unit 101 may refer to the recognition results and notify the display unit 104 to display the support instruction content in FIG. 21A.

In addition, in FIGS. 20 and 21A, the arrow 2001 is used as an example of highlighting, but for example, the method may include framing the target object to be packed, changing the display color of the target object to be packed or the non-target object to be packed, and showing the name of the target object to be packed or the image of the object to be packed, and it is not limited to these.

FIG. 21B is an illustrative diagram showing a third example of the support instruction content according to the fourth embodiment of the invention.

As shown in FIG. 21B, the object to be packed may be additionally displayed in the order of being packed, and the state in the actual packing box and the state in the packing box in the displayed support instruction content may be displayed to be the same. In the example in FIG. 21B, the to-be-packed objects which are displayed in a translucent manner is shown by broken lines. FIG. 21B shows an example in which the objects to be packed displayed in the translucent manner are already stored in the packing box and an instruction to store a non-to-be-packed object 2105 highlighted by an arrow 2104 is performed.

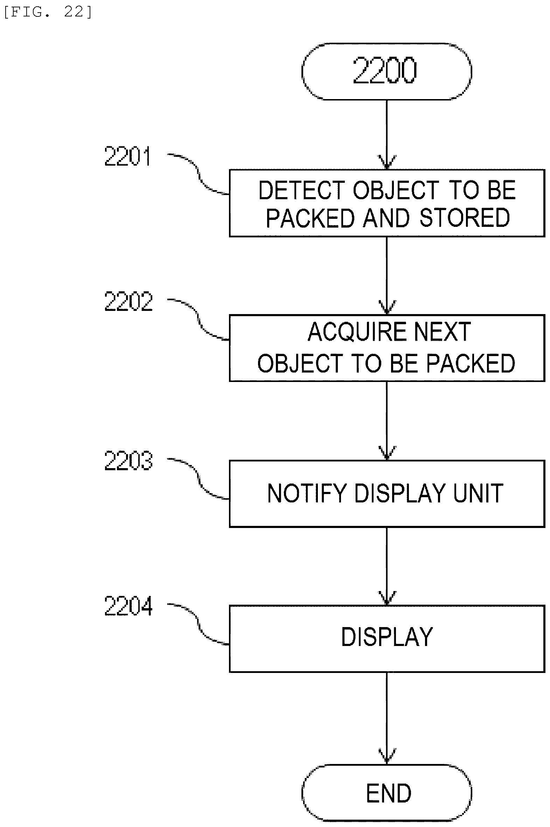

FIG. 22 is a flowchart showing work instruction processing according to the fourth embodiment of the invention.

In step 2201, an instruction symbol reading unit 1202 detects the object to be packed held by the worker and the object to be packed that is stored by the worker. In step 2202, the control unit 101 refers to the order information 407 of the support instruction information shown in FIG. 18, and acquires information of the object to be packed that should be stored next. In step 2203, the control unit 101 notifies the display unit 104 of information for specifying the object to be packed that should be stored next. As information for specifying the object to be packed, it includes the ID information 401 shown in FIG. 18, the name 402 of the object to be packed, and the coordinate position 1801. In step 2204, the display unit 104 highlights the designated object to be packed by the method shown in FIGS. 20 to 21B, for example.

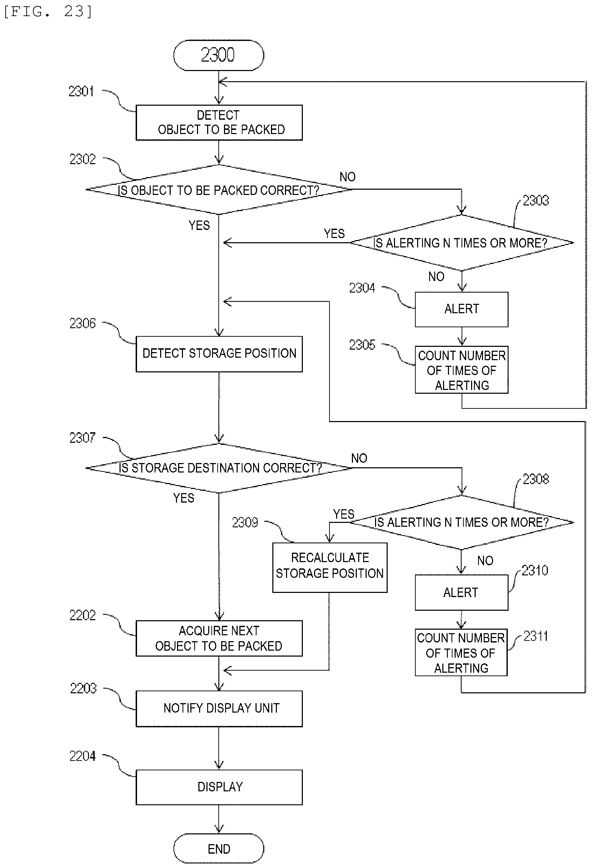

FIG. 23 is a flowchart showing a first processing of a work instruction when the worker performs a work different from an instruction according to the fourth embodiment of the invention.

The processing in FIG. 23 is assumed to be executed when, for example, the worker performs the work different from the instruction by mistake, but may be executed when the worker intentionally performs the work different from the instruction.

In step 2301, the recognition unit 1905 detects the object to be packed that is held by the worker and its storage position. In step 2302, the control unit 101 determines whether the recognized object to be packed is an instructed object to be packed (that is, the object to be packed that should be stored next, which is specified from the order information 407). When the recognized object to be packed is the instructed object to be packed, the processing proceeds to step 2306, and when the object to be packed is different from the instructed object to be packed, the processing proceeds to step 2303.

In step 2303, the control unit 101 determines whether the number of times of alerting the different object to be packed is N times or more, and when it is N times or more, the processing proceeds to step 2306, and when it is less than N times, the processing proceeds to step 2304. Here, N is any desired number, and can be appropriately determined in advance. In step 2304, the control unit 101 alerts the different object to be packed. The alert method may be, for example, a method of sending a message on a display screen, or emitting a sound that shows an error using a speaker, but is not limited to these. In step 2305, the number of times of alerting is counted and held, and the processing returns to step 2301.

In step 2306, the recognition unit 1905 detects the object to be packed that is stored by the worker and the storage position. In step 2307, the control unit 101 determines whether a storage destination is correct, and acquires information of the next object to be packed in step 2202. When the storage position of the object to be packed is wrong, the processing proceeds to step 2308. In step 2308, the control unit 101 determines whether the number of times of alerting that the storage position is different is N times or more, and when it is N times or more, the processing proceeds to step 2309, and when it is less than N times, the processing proceeds to step 2310. In step 2310, the control unit 101 alerts that the storage position is different. In step 2311, the control unit 101 counts and holds the number of times of alerting. The alert method is, for example, as described above, such as sending the message on the display screen, but is not limited to these.

When it is determined that the number of times of alerting that the storage position is different is N or more, since the storage position is wrong for N times or more, but the worker does not correct it and does not store it at the correct position, the object to be packed is stored in a layout different from the original plan. In this case, since it is also necessary to change the storage position of another unstored object to be packed, in step 2309, the control unit 101 recalculates the storage position that matches with the current layout. Specifically, the control unit 101 recalculates the arrangement of the unstored object to be packed in the packing box at present based on the position of the object to be packed that is stored so far including the object to be packed that is stored at the wrong position. As a result, the most suitable storage position of the object to be packed on the premise of the current state of the packing box is calculated, and switching the object to be packed that is already stored is prevented. In step 2203, the control unit 101 notifies the display unit 104, and the display unit 104 performs display in step 2204.

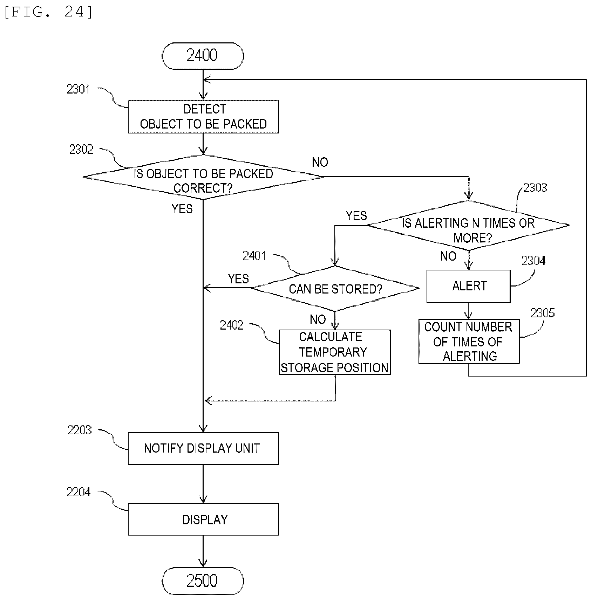

FIG. 24 is a flowchart showing a second processing of the work instruction when the worker performs the work different from the instruction according to the fourth embodiment of the invention.

The processing in FIG. 24 is assumed to be executed, for example, when the instructed work cannot be performed for the convenience of the work. For the convenience of the work, a case that the instructed work cannot be performed is, for example, a case that the instructed work cannot be performed due to the degree of congestion of a collection work location or an inventory status of the collected objects when the collection work of the commodity is performed. At this time, since the object to be packed cannot be stored in the instructed order, once the object to be packed may be temporarily stored in an empty area of a collection box, the storage position may be corrected later.

Steps 2301 to 2305 are as described with reference to FIG. 23. When the number of times of alerting in step 2303 is N times or more, the processing proceeds to step 2401.

In step 2401, since the detected object to be packed is to be stored in an order different from the original order, but the detected object to be packed exists in a group of the objects to be packed that should be stored in the packing box (for example, the object to be packed should be stored in the packing box eventually, and is to be stored earlier than scheduled), it is determined whether the object to be packed can be stored at the time of the work based on the arrangement of the objects to be packed that are stored in the packing box already at the time of the work. For example, the object to be packed should originally be stored at a second tier counted from a bottom surface, but it is determined that it cannot be stored when the object to be packed of a first tier grounded on the bottom surface is not yet stored. In addition, although not in the original order, if the object to be packed of the first tier is already stored and another object to be packed can be placed above it (that is, the original storage position), it is determined that it can be stored.

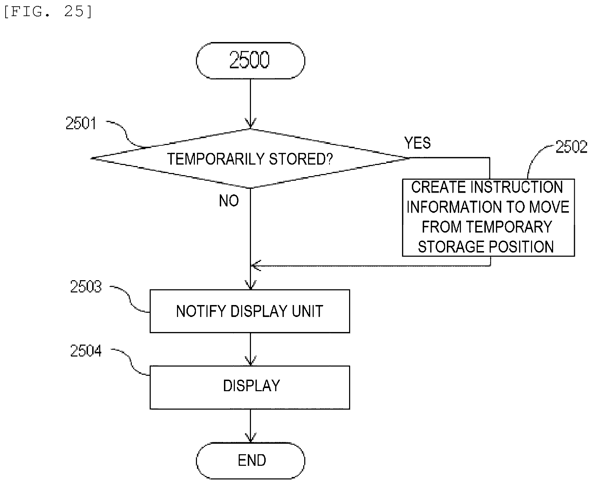

When it is determined that it can be stored, the processing proceeds to step 2203. When it is determined that it cannot be stored, the control unit 101 calculates a temporary storage position based on the arrangement of the objects to be packed that are already stored in the packing box in step 2402, and creates the support instruction information. In step 2203, the control unit 101 notifies the display unit 104, and the display unit 104 performs display in step 2204, and the processing proceeds to step 2500. The processing after step 2500 will be described later with reference to FIG. 25.

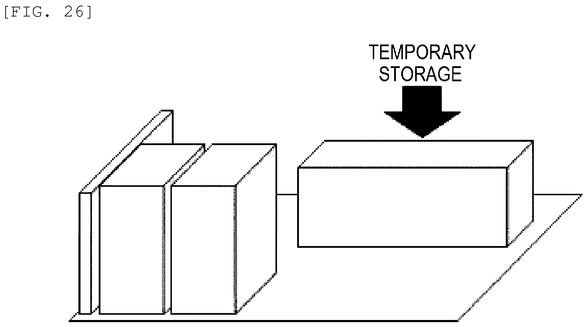

FIG. 26 is an illustrative diagram showing an example of the display screen that instructs a temporary storage location according to the fourth embodiment of the invention.

In the example in FIG. 26, the temporary storage location is designated by an arrow and a "temporary storage" character. A designation method may be a method such as, for example, using a color for the non-to-be-packed object to be displayed that is not used as the color of the other objects to be packed to emphasize, but is not limited to these.

FIG. 25 is a flowchart showing processing of guiding a movement of the object to be packed to the original position after the temporary storage is performed according to the fourth embodiment of the invention.

In step 2501, the control unit 101 confirms whether the object to be packed that should be stored is already temporarily stored in the packing box. For example, the control unit 101 may confirm whether the temporary storage is instructed inside the work support device 100, and the recognition unit 1905 may confirm the arrangement position of the objects to be packed in the packing box, and refer to the control unit 101 for the results. When the object to be packed that should be stored is temporarily stored, the processing proceeds to step 2502, and when it is not temporarily stored, the processing proceeds to step 2503.

In step 2502, the control unit 101 creates an instruction information so as to move from the temporary storage position to the original position. In step 2503, the control unit 101 notifies the display unit 104 that the support instruction information is changed. In step 2504, the display unit 104 performs display based on the changed support instruction information.

In step 2501, the control unit 101 further determines whether the temporarily stored object to be packed can be stored in the original storage position with the same method as step 2401 in FIG 24, and may execute step 2502 when it is determined that it can be stored.

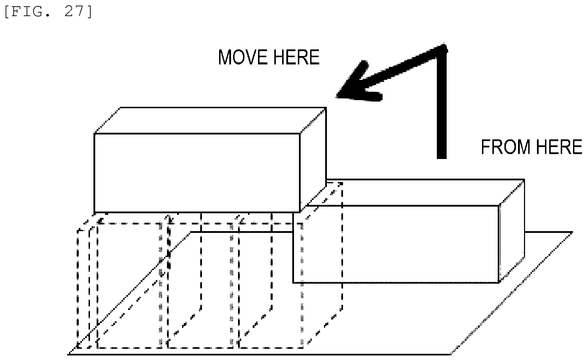

FIG. 27 is an illustrative diagram showing an example of the indication screen when the movement is instructed from the temporary storage position to the original position according to the fourth embodiment of the invention.

In the example in FIG. 27, the objects to be packed, other than the object to be packed which is a moving object, is displayed in the translucent manner. A movement path from a start point (for example, the position where temporary placement is instructed) to an end point (for example, the original storage position) in which the object to be packed which is the moving object moves is displayed by an arrow. The characters "from here" and "move here" are also displayed. The designation method is not limited to the above, and, for example, the movement path of the object to be packed may be shown by a moving image in which the object to be packed actually moves.

In addition, when confirming whether the object to be packed itself is correct, for example, together with "inspection" work at the time of packing work, the control unit 101 continues to alert in step 2303, regardless of whether the number of times of alerting is N times or more, to prompt the worker to correct the error.

In this way, by recognizing the stored object to be packed and its position and instructing the storage position, it is possible to prevent the storage position of the object to be packed from being switched, and the work efficiency can be improved.

### [Fifth Embodiment]

Next, a fifth embodiment related to a packing support method according to the invention will be described. In the fifth embodiment, by performing a support instruction display using the color of the object to be packed, the error in the work can be prevented, and it becomes unnecessary to switch the storage position of the object to be packed, and the work efficiency can be improved. Except for the differences described below, since each unit of the system of the fifth embodiment has the same functions as those of each unit denoted by the same reference numerals of the first to fourth embodiments shown in FIGS. 1A to 27, and FIG. 30, and the description thereof will be omitted.

The configuration of the work support device 100 in the present embodiment is as shown in FIGS. 19A and 19B. The recognition unit 1905 measures at least one of the size, the shape, the color, and the weight of the object to be packed. The recognition unit 1905 may include a camera and the like, which may be used to recognize the size, the shape, and the color of the object to be packed, or may include a weight scale and the like, which may be used to specify the individual object to be packed that is stored based on the measured weight, or may recognize the object to be packed using a method other than the above.

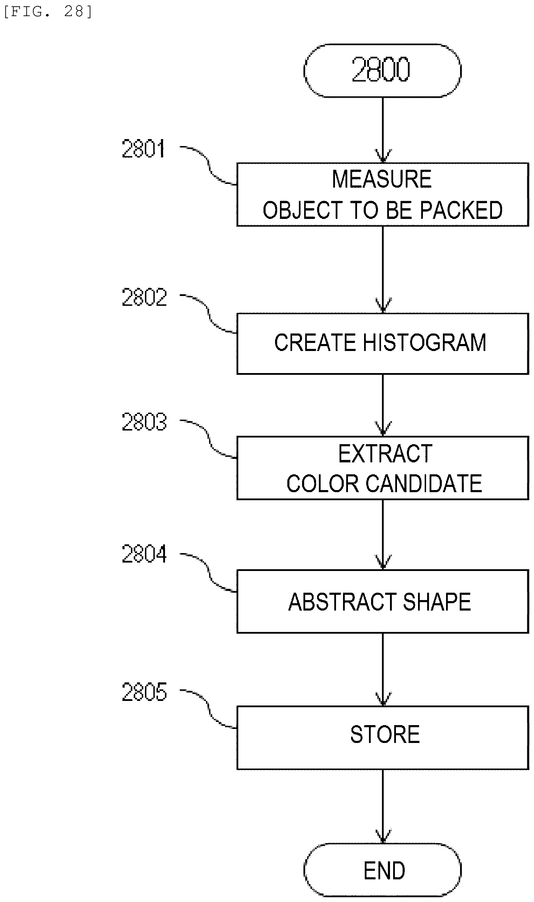

FIG. 28 is a flowchart showing processing of acquiring and storing information such as the size of the object to be packed by a work support device according to the fifth embodiment of the invention.

In step 2801, the recognition unit 1905 measures at least the color of the object to be packed. The recognition unit 1905 may further measure at least one of the size, the shape, and the weight of the object to be packed. In step 2802, the control unit 101 creates a histogram of the acquired color based on the measurement results by the recognition unit 1905. In step 2803, the control unit 101 refers to the created histogram, and extracts a color that has a high composition ratio among the colors that constitute the object to be packed. The color extracted here may be one color or a plurality of colors. When there are a plurality of colors, the control unit 101 adds, as information that shows the order of candidates, a priority assigned in the descending order of the composition ratio. In step 2804, the control unit 101 abstracts the shape of the object to be packed. For example, instead of displaying the shape of the object to be packed as it is, the work support device 100 may simplify and display the object to be packed in a simulated shape. In step 2805, the control unit 101 registers the measured and extracted information of at least any one of the size, the shape, the color, and the weight in, for example, the database 105 of the work support device 100.

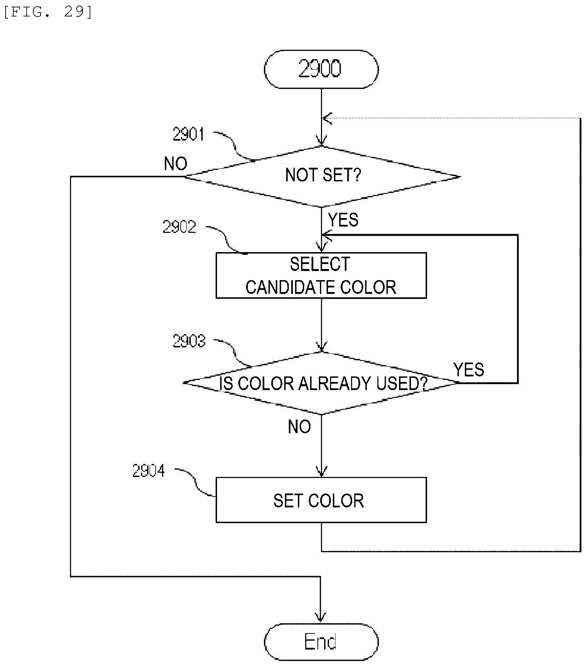

FIG. 29 is a flowchart showing processing of determining color information at the time of generating support instruction information by the work support device according to the fifth embodiment of the invention.

In step 2901, the control unit 101 confirms whether the object to be packed in which the color information is not determined remains. When no object to be packed in which the color information is not determined remains, the processing ends, and if not, the processing proceeds to step 2902. In step 2902, the control unit 101 selects any one of the objects to be packed in which the color information is not determined, and refers to the color information of the selected object to be packed that is registered in the database 105 to select a candidate color. When a plurality of colors are registered, for example, the control unit 101 confirms whether the priority is added at the time of registration, and when it is added, performs selection in the descending order of the priority.

In step 2903, the control unit 101 confirms whether the selected candidate color is used as a color that shows another object to be packed. When it is already used, the processing returns to step 2902, and the control unit 101 selects the candidate color again. When a plurality of colors are registered, the color to which the next priority is added is selected as the candidate color. When a plurality of colors are not registered, the control unit 101 selects any one of the color that is not used regardless of the registered color, or selects a color of the same color by changing at least one of the luminance and the brightness of the same color as the registered color. In step 2904, the control unit 101 sets the selected color to the support instruction information, and the processing returns to step 2901.

The support instruction information according to the fifth embodiment includes, for example, in addition to the information that is the same as the support instruction information 400 shown in FIG. 4 or the support instruction information 1800 shown in FIG. 18, information of the color selected in step 2904 described above.

According to the fifth embodiment, the figure that simulates the object to be packed included in the support instruction content is colored in a color close to the actual object to be packed (that is, the color set in step 2904). Further, the figures of different types of objects to be packed are prevented from being colored in the same color. As a result, the error in the work can be prevented, and it becomes unnecessary to switch the storage position of the object to be packed, and the work efficiency can be improved.

In the invention, the database 105 that includes information such as the work information performed by the worker and the size information of the object to be packed is held in the work support device 100, but these databases may be held by an external device, and the work support device 100 may acquire such information by communication between the external devices.

The invention is not limited to the embodiments described above, and includes various modifications. For example, the embodiments described above is described in detail for better understanding of the invention, and are not necessarily limited to those that have all the configurations described above. In addition, a part of the configuration of one embodiment can be replaced with the configuration of another embodiment, and the configuration of another embodiment can be added to the configuration of one embodiment. In a part of a configuration of each embodiment, another configuration can be added, removed, or replaced.

Each configuration, function, processing unit, processing methods, and the like described above may be realized by hardware, for example, by designing part or all of them with an integrated circuit. In addition, each configuration, function, and the like described above may be realized by software by interpreting and executing a program that realizes the respective functions by a processor. Information such as programs, tables, and files that realize each function can be stored in a non-volatile semiconductor memory, a storage device such as a hard disk drive and a solid state drive (SSD), or a computer readable non-transitory data storage medium such as an IC card, an SD card, or a DVD.

In addition, control lines and information lines show what is considered to be necessary for the description, but not all the control lines and the information lines in the product are necessarily shown. Actually, it may be considered that almost all of the configurations are connected to each other.

## Claims

1. A work support device (100) which supports a work of storing a plurality of articles of a plurality of types in a packing box, the work support device comprising:
a processor (111); a storage unit (112, 113); a display unit (104); and an instruction information reading unit (102), wherein
the storage unit holds at least a size of the articles of each type,
the instruction information reading unit reads work instruction information for instructing a packing work of storing the article in the packing box,
the processor
acquires a quantity and a size of the articles of each type to be stored in the packing box based on the work instruction information and information held in the storage unit, and
generates a support image that overlooks a three-dimensional space in which a figure, in which the sizes of the articles of each type to be stored in the packing box are reduced at a same scale, is arranged in a predetermined direction from a predetermined reference position, according to an indication order of the article of each type based on a predetermined rule, for a quantity of each type to be stored in the packing box,
wherein the display unit displays the support image;
the storage unit further holds at least one of a weight, a collection order, and a storing order of the articles of each type, and
the indication order of the articles of each type based on the predetermined rule is any one of a weight order, a volume order, a quantity order, the collection order, and the storing order of the articles of each type, or a combination of two or more of them, based on the information held in the storage unit;
the work support device further comprising:
a recognition unit (1905) that recognizes an article for which a worker performs the packing work to be stored in the packing box, wherein
the storage unit further holds a size of the packing box, and
the processor
calculates an arrangement of each of the articles in the packing box and an order of the packing work based on a size of the packing box and the quantity and the size of the articles of each type to be packed in the packing box,
generates the support image in which the figure corresponding to each of the articles is arranged according to the arrangement of each of the articles in the packing box, and
adds information that displays the figure corresponding to the article for which the packing work is performed next to the support image based on the calculated order of the packing work; and wherein
the recognition unit recognizes an actual arrangement of the articles in the packing box for which a worker performs the packing work, and
the processor recalculates an arrangement of articles not yet stored in the packing box based on the actual arrangement when the calculated arrangement and the actual arrangement of the articles for which the worker performs the packing work are different.

2. The work support device according to claim 1, wherein
the storage unit further holds information of a caution item when the articles for each type is stored, and
the processor generates the support image that includes a display of the caution item.

3. The work support device according to claim 1, wherein
the processor
calculates an arrangement of each of the articles in the packing box based on the size of the packing box, and the quantity and the size of the articles of each type to be stored in the packing box, and
generates the support image such that articles to be in contact with a bottom surface of the packing box and other articles are displayed in different areas in the screen.

4. The work support device according to claim 3, wherein
the processor arranges a figure corresponding to the articles to be in contact with the bottom surface of the packing box according to the arrangement in the packing box, and further generates the support image that displays a long side surface direction of the packing box.

5. The work support device according to claim 4, wherein
the processor
generates the support image that overlooks a three-dimensional space in which the figure corresponding to the articles to be in contact with the bottom surface of the packing box and the figure corresponding to the other articles are arranged from the reference positions that are respectively different in a predetermined direction, and
changes the arrangement of the two reference positions and the long side surface direction of the packing box to be displayed according to a quantity of the articles which is to be displayed.

6. The work support device according to claim 1, further comprising:
a recognition unit that recognizes at least a color of each of the articles, wherein
the processor selects one of one or more colors that constitute each of the articles recognized by the recognition unit, and generates the support image so as to display the selected color as a color of the figure corresponding to each of the articles.

7. The work support device according to claim 6, wherein
the processor selects a different color for each type of the article.

8. The work support device according to claim 1, wherein
the processor
calculates an arrangement of each of the articles in the packing box based on a size of the packing box, and the quantity and the size of the articles of each type to be stored in the packing box,
generates, as the support image, a first support image that overlooks a three-dimensional space in which the figure corresponding to each of the articles is arranged in a predetermined direction according to an indication order of the articles of each type based on a predetermined rule, and a second support image in which the figure corresponding to each of the articles is arranged according to an arrangement of each of the articles in the packing box,
causes the display unit to display one of the first support image or the second support image, and
switches the support image displayed on the display unit when an instruction to switch the display is input.

9. The work support device according to claim 8, wherein
the processor adds a display that the article is adjacent to a wall surface in the figure corresponding to an article adjacent to the wall surface of the packing box among the articles arranged in the packing box.

10. The work support device according to claim 1, wherein
the recognition unit recognizes an article picked up by the worker so as to perform the packing work; and
the processor
determines whether the recognized article is an article for which the packing work is performed next based on the calculated order of the packing work,
determines whether the recognized article can be stored as in the calculated arrangement based on the arrangement of the articles already stored in the packing box, when the recognized article is not the next article for which the packing work is performed,
calculates a temporary storage position of the recognized article in the packing box based on an arrangement of the articles already stored in the packing box when the recognized article cannot be stored as in the calculated arrangement, and
generates the support image that includes the calculated temporary storage position.

11. The work support device according to claim 10, wherein
the processor generates the support image that includes an instruction to store an article stored in the temporary storage position as in the calculated arrangement.

12. A work support method, which is executed by a work support device to support a work of storing a plurality of articles of a plurality of types in a packing box, wherein
the work support device includes a processor, a storage unit, a display unit, a recognition unit, and an instruction information reading unit, wherein
the storage unit holds at least a size of the article of each type and further holds a size of the packing box, and the recognition unit recognizes an article for which a worker performs the packing box to be stored in the packing box;
the work support method comprising:
a step of reading work instruction information for instructing a packing work of storing the article in the packing box by the instruction information reading unit;
a step of acquiring a quantity and a size of the article of each type to be stored in the packing box based on the work instruction information and information held in the storage unit by the processor;
a step of calculating an arrangement of each of the articles in the packing box and an order of the packing work based on a size of the packing box and the quantity and the size of the articles of each type to be packed in the packing box;
a step of generating a support image that overlooks a three-dimensional space in which a figure, in which the sizes of the articles of each type to be stored in the packing box are reduced at a same scale, is arranged in a predetermined direction from a predetermined reference position, according to an indication order of the articles of each type based on a predetermined rule, for a quantity of each type to be stored in the packing box by the processor, wherein the support image is generated according to the arrangement of each of the articles in the packing box;
a step of displaying the support image by the display unit;
a step of adding information that displays the figure corresponding to the article for which the packing work is performed next to the support image based on the calculated order of the packing work;
a step of recognizing, by the recognition unit, an actual arrangement of the articles in the packing box for which a worker performs the packing work; and
recalculating an arrangement of articles not yet stored in the packing box based on the actual arrangement when the calculated arrangement and the actual arrangement of the articles for which the worker performs the packing work are different
wherein the storage unit further holds at least one of a weight, a collection order, and a storing order of the articles of each type, and
the indication order of the articles of each type based on the predetermined rule is any one of a weight order, a volume order, a quantity order, the collection order, and the storing order of the articles of each type, or a combination of two or more of them, based on the information held in the storage unit.

## Patentansprüche

1. Arbeitsunterstützungsvorrichtung (100), die eine Arbeit des Lagerns einer Vielzahl von Artikeln einer Vielzahl von Typen in einer Verpackungskiste unterstützt, wobei die Arbeitsunterstützungsvorrichtung Folgendes umfasst:
einen Prozessor (111); eine Speichereinheit (112, 113); eine Anzeigeneinheit (104); und eine Befehlsinformationenleseeinheit (102), wobei:
die Speichereinheit zumindest eine Größe der Artikel jedes Typs speichert,
die Befehlsinformationenleseeinheit Arbeitsbefehlsinformationen zum Anweisen einer Verpackungsarbeit zum Lagern des Artikels in der Verpackungskiste liest,
wobei der Prozessor
eine Menge und eine Größe der Artikel jedes Typs, die in der Verpackungskiste zu lagern sind, basierend auf den Arbeitsbefehlsinformationen und von Informationen, die in der Speichereinheit gespeichert sind, erfasst und
ein Unterstützungsbild erzeugt, das einen Überblick über einen dreidimensionalen Raum liefert, in dem eine Abbildung, in der die Größen der Artikel jedes Typs, die in der Verpackungskiste zu lagern sind, auf denselben Maßstab reduziert sind, in einer vorbestimmten Richtung von einer vorbestimmten Referenzposition gemäß einer Angabenreihenfolge des Artikels jedes Typs basierend auf einer vorbestimmten Regel für eine Menge jedes Typs, der in der Verpackungskiste zu lagern ist, angeordnet ist,
wobei die Anzeigeeinheit das Unterstützungsbild anzeigt;
die Speichereinheit ferner zumindest eines aus einem Gewicht, einer Sammelreihenfolge und einer Lagerreihenfolge der Artikel jedes Typs enthält und
die Angabenreihenfolge der Artikel jedes Typs basierend auf der vorbestimmten Regel ein beliebiges aus einer Gewichtsreihenfolge, einer Volumenreihenfolge, einer Mengenreihenfolge, der Sammelreihenfolge und der Lagerreihenfolge der Artikel jedes Typs oder eine Kombination aus zwei oder mehr davon basierend auf den in der Speichereinheit enthaltenen Informationen ist;
wobei die Arbeitsunterstützungsvorrichtung ferner Folgendes umfasst:
eine Erkennungseinheit (1905), die einen Artikel erkennt, für den eine Arbeitskraft die Verpackungsarbeit zum Lagern in der Verpackungskiste durchführt, wobei
die Speichereinheit ferner eine Größe der Verpackungskiste speichert und
der Prozessor
eine Anordnung jedes der Artikel in der Verpackungskiste und eine Reihenfolge der Verpackungsarbeit basierend auf einer Größe der Verpackungskiste und der Menge und der Größe der Artikel jedes Typs, die in der Verpackungskiste zu verpacken sind, berechnet,
das Unterstützungsbild erzeugt, in dem die Abbildung, die jedem der Artikel entspricht, gemäß der Anordnung jedes der Artikel in der Verpackungskiste angeordnet wird, und
Informationen hinzufügt, die die Abbildung, die dem Artikel entspricht, für den die Verpackungsarbeit durchzuführen ist, neben dem Unterstützungsbild basierend auf der berechneten Reihenfolge der Verpackungsarbeit anzeigen; und wobei
die Erkennungseinheit eine tatsächliche Anordnung der Artikel in der Verpackungskiste erkennt, für die eine Arbeitskraft die Verpackungsarbeit durchführt, und
der Prozessor eine Anordnung von Artikeln, die noch nicht in der Verpackungskiste gelagert sind, basierend auf der tatsächlichen Anordnung erneut berechnet, wenn die berechnete Anordnung und die tatsächliche Anordnung der Artikel, für die die Arbeitskraft die Verpackungsarbeit durchführt, unterschiedlich sind.

2. Arbeitsunterstützungsvorrichtung nach Anspruch 1, wobei die Speichereinheit ferner Informationen eines Warngegenstands speichert, wenn die Artikel für jeden Typ gelagert werden, und
der Prozessor das Unterstützungsbild erzeugt, das eine Anzeige des Warngegenstands umfasst.

3. Arbeitsunterstützungsvorrichtung nach Anspruch 1, wobei der Prozessor
eine Anordnung jedes der Artikel in der Verpackungskiste basierend auf der Größe der Verpackungskiste und der Menge und der Größe der Artikel jedes Typs, die in der Verpackungskiste zu lagern sind, berechnet, und
das Unterstützungsbild so erzeugt, dass Artikel, die mit einer Bodenoberfläche der Verpackungskiste in Kontakt kommen und andere Artikel in verschiedenen Bereichen auf dem Bildschirm angezeigt werden.

4. Arbeitsunterstützungsvorrichtung nach Anspruch 3, wobei der Prozessor eine Abbildung, die den Artikeln entspricht, die mit der Bodenoberfläche der Verpackungskiste gemäß der Anordnung in der Verpackungskiste in Kontakt kommen anordnet und ferner das Unterstützungsbild erzeugt, das eine Oberflächenrichtung der langen Seite der Verpackungskiste anzeigt.

5. Arbeitsunterstützungsvorrichtung nach Anspruch 4, wobei der Prozessor
das Unterstützungsbild erzeugt, das einen Überblick über einen dreidimensionalen Raum gibt, in dem die Abbildung, die den Artikeln entspricht, die mit der Bodenoberfläche der Verpackungskiste in Kontakt kommen, und die Abbildung, die den anderen Artikeln entspricht, ausgehend von den Referenzpositionen angeordnet werden, die sich jeweils in eine vorbestimmte Richtung unterscheiden, und
die Anordnung der zwei Referenzpositionen und der Oberflächenrichtung der langen Seite der Verpackungskiste, die anzuzeigen sind, gemäß einer Menge der Artikel, die anzuzeigen ist, ändert.

6. Arbeitsunterstützungsvorrichtung nach Anspruch 1, die ferner Folgendes umfasst:
eine Erkennungseinheit, die zumindest eine Farbe jedes der Artikel erkennt, wobei
der Prozessor eine oder mehrere Farben auswählt, die jeden der Artikel, die von der Erkennungseinheit erkannt werden, darstellt, und das Unterstützungsbild so erzeugt, um die ausgewählte Farbe als eine Farbe der Abbildung, die jedem der Artikel entspricht, anzuzeigen.

7. Arbeitsunterstützungsvorrichtung nach Anspruch 6, wobei der Prozessor eine andere Farbe für jeden Typ der Artikel auswählt.

8. Arbeitsunterstützungsvorrichtung nach Anspruch 1, wobei der Prozessor
eine Anordnung jedes der Artikel in der Verpackungskiste basierend auf einer Größe der Verpackungskiste und der Menge und der Größe der Artikel jedes Typs, die in der Verpackungskiste zu lagern sind, berechnet,
ein erstes Unterstützungsbild, das einen Überblick über einen dreidimensionalen Raum liefert, in dem die Abbildung, die jedem der Artikel entspricht, in einer vorbestimmten Richtung gemäß einer Angabenreihenfolge der Artikel jedes Typs basierend auf einer vorbestimmten Regel angeordnet ist, und ein zweites Unterstützungsbild, in dem die Abbildung, die jedem der Artikel entspricht, gemäß einer Anordnung jedes der Artikel in der Verpackungskiste angeordnet ist, als das Unterstützungsbild erzeugt,
veranlasst, dass die Anzeigeeinheit eines aus dem ersten Unterstützungsbild und dem zweiten Unterstützungsbild anzeigt, und
das Unterstützungsbild, das auf der Anzeigeeinheit angezeigt wird, umschaltet, wenn ein Befehl zum Umschalten der Anzeige eingegeben wird.

9. Arbeitsunterstützungsvorrichtung nach Anspruch 8, wobei der Prozessor eine Anzeige, dass der Artikel benachbart zu einer Wandoberfläche ist, in der Abbildung, die einem Artikel benachbart zu der Wandoberfläche der Verpackungskiste aus den Artikeln entspricht, die in der Verpackungskiste angeordnet sind, hinzufügt.

10. Arbeitsunterstützungsvorrichtung nach Anspruch 1, wobei
die Erkennungseinheit einen Artikel erkennt, der von einer Arbeitskraft aufgenommen wurde, um die Verpackungsarbeit durchzuführen; und
der Prozessor
bestimmt, ob der erkannte Artikel ein Artikel ist, für den die Verpackungsarbeit als nächstes durchzuführen ist, basierend auf der berechneten Reihenfolge der Verpackungsarbeit,
bestimmt, ob der erkannte Artikel wie in der berechneten Anordnung gelagert werden kann, basierend auf der Anordnung der Artikel, die bereits in der Verpackungskiste gelagert sind, wenn der erkannte Artikel nicht der nächste Artikel ist, für den die Verpackungsarbeit durchgeführt wird,
eine temporäre Lagerposition des erkannten Artikels in der Verpackungskiste basierend auf einer Anordnung der Artikel, die bereits in der Verpackungskiste gelagert sind, berechnet, wenn der erkannte Artikel nicht wie in der berechneten Anordnung gelagert werden kann, und
das Unterstützungsbild erzeugt, das die berechnete temporäre Lagerposition umfasst.

11. Arbeitsunterstützungsvorrichtung nach Anspruch 10, wobei der Prozessor das Unterstützungsbild erzeugt, das einen Befehl zum Lagern eines Artikels, der in der temporären Lagerposition gelagert ist, wie in der berechneten Anordnung umfasst.

12. Arbeitsunterstützungsverfahren, das von einer Arbeitsunterstützungsvorrichtung ausgeführt wird, um eine Arbeit des Lagerns einer Vielzahl von Artikeln einer Vielzahl von Typen in einer Verpackungskiste zu unterstützen, wobei
die Arbeitsunterstützungsvorrichtung einen Prozessor, eine Speichereinheit, eine Anzeigeneinheit, eine Erkennungseinheit und eine Befehlsinformationenleseeinheit umfasst, wobei
die Speichereinheit zumindest eine Größe der Artikel jedes Typs speichert und ferner eine Größe der Verpackungskiste speichert und die Erkennungseinheit einen Artikel erkennt, für den eine Arbeitskraft die Verpackungsarbeit zum Lagern in der Verpackungskiste durchführt;
wobei das Arbeitsunterstützungsverfahren Folgendes umfasst:
einen Schritt des Lesens von Arbeitsbefehlsinformationen zum Anweisen einer Verpackungsarbeit des Artikels in die Verpackungskiste durch die Befehlsinformationenleseeinheit;
einen Schritt des Erfassens einer Menge und einer Größe des Artikels jedes Typs, die in der Verpackungskiste zu lagern sind, basierend auf den Arbeitsfehlinformationen und den Informationen, die in der Speichereinheit durch den Prozessor gespeichert werden;
einen Schritt des Berechnens einer Anordnung jedes der Artikel in der Verpackungskiste und einer Reihenfolge der Verpackungsarbeit basierend auf einer Größe der Verpackungskiste und der Menge und der Größe der Artikel jedes Typs, die in der Verpackungskiste zu verpacken sind;
einen Schritt des Erzeugens eines Unterstützungsbilds, das einen Überblick über einen dreidimensionalen Raum liefert, in dem eine Abbildung, in der die Größen der Artikel jedes Typs, die in der Verpackungskiste zu lagern sind, auf denselben Maßstab reduziert sind, in einer vorbestimmten Richtung von einer vorbestimmten Referenzposition gemäß einer Angabenreihenfolge des Artikels jedes Typs basierend auf einer vorbestimmten Regel für eine Menge jedes Typs, der in der Verpackungskiste zu lagern ist, angeordnet ist, wobei das Unterstützungsbild gemäß der Anordnung jedes der Artikel in der Verpackungskiste erzeugt wird;
einen Schritt des Anzeigens des Unterstützungsbilds durch die Anzeigeeinheit;
einen Schritt des Hinzufügens von Informationen, die die Abbildung, die dem Artikel entspricht, für den die Verpackungsarbeit durchzuführen ist, neben dem Unterstützungsbild basierend auf der berechneten Reihenfolge der Verpackungsarbeit anzeigen;
einen Schritt des Erkennens einer tatsächlichen Anordnung der Artikel in der Verpackungskiste, für die eine Arbeitskraft die Verpackungsarbeit durchführt, durch die Erkennungseinheit; und
erneutes Berechnen einer Anordnung von Artikeln, die noch nicht in der Verpackungskiste gelagert sind, basierend auf der tatsächlichen Anordnung, wenn die berechnete Anordnung und die tatsächliche Anordnung der Artikel, für die die Arbeitskraft die Verpackungsarbeit durchführt, unterschiedlich sind,
wobei die Speichereinheit ferner zumindest eines aus einem Gewicht, einer Sammelreihenfolge und einer Lagerreihenfolge der Artikel jedes Typs speichert und
die Angabenreihenfolge der Artikel jedes Typs basierend auf der vorbestimmten Regel ein beliebiges aus einer Gewichtsreihenfolge, einer Volumenreihenfolge, einer Mengenreihenfolge, der Sammelreihenfolge und der Lagerreihenfolge der Artikel jedes Typs oder einer Kombination aus zwei oder mehr von diesen, basierend auf den Informationen, die in der Speichereinheit gespeichert werden.

## Revendications

1. Dispositif d'assistance au travail (100) qui assiste dans le cadre d'un travail de stockage d'une pluralité d'articles d'une pluralité de types dans une boîte d'emballage, le dispositif d'assistance au travail comprenant :
un processeur (111) ; une unité de stockage (112, 113) ; une unité d'affichage (104) ; et une unité de lecture d'informations d'instruction (102), dans lequel
l'unité de stockage contient au moins une taille des articles de chaque type ;
l'unité de lecture d'informations d'instruction lit des informations d'instruction de travail pour ordonner un travail d'emballage consistant à stocker l'article dans la boîte d'emballage ;
le processeur
acquiert une quantité et une taille des articles de chaque type à stocker dans la boîte d'emballage sur la base des informations d'instruction de travail et d'informations contenues dans l'unité de stockage ; et
génère une image d'assistance qui surplombe un espace tridimensionnel dans lequel une figure, dans laquelle les tailles des articles de chaque type à stocker dans la boîte d'emballage sont réduites à une même échelle, est agencée dans une direction prédéterminée à partir d'une position de référence prédéterminée, selon un ordre d'indication de l'article de chaque type basé sur une règle prédéterminée, pour une quantité de chaque type à stocker dans la boîte d'emballage ;
dans laquelle l'unité d'affichage affiche l'image d'assistance ;
l'unité de stockage contient en outre au moins l'un des éléments parmi un poids, un ordre de collecte et un ordre de stockage des articles de chaque type ; et
l'ordre d'indication des articles de chaque type basé sur la règle prédéterminée est l'un quelconque parmi un ordre de poids, un ordre de volume, un ordre de quantité, l'ordre de collecte, et l'ordre de stockage des articles de chaque type, ou une combinaison de deux ou plus d'entre eux, sur la base des informations contenues dans l'unité de stockage ;
le dispositif d'assistance au travail comprenant en outre :
une unité de reconnaissance (1905) qui reconnaît un article pour lequel un travailleur met en œuvre le travail d'emballage à stocker dans la boîte d'emballage, dans laquelle
l'unité de stockage contient en outre une taille de la boîte d'emballage ; et
le processeur
calcule un agencement de chacun des articles dans la boîte d'emballage et un ordre du travail d'emballage sur la base d'une taille de la boîte d'emballage et de la quantité et de la taille des articles de chaque type à emballer dans la boîte d'emballage ;
génère l'image d'assistance dans laquelle la figure correspondant à chacun des articles est agencée en fonction de l'agencement de chacun des articles dans la boîte d'emballage ; et
ajoute des informations qui affichent la figure correspondant à l'article pour lequel le travail d'emballage est mis en œuvre à côté de l'image d'assistance sur la base de l'ordre calculé du travail d'emballage ; et dans lequel
l'unité de reconnaissance reconnaît un agencement réel des articles dans la boîte d'emballage pour laquelle un travailleur met en œuvre le travail d'emballage ; et
le processeur recalcule un agencement d'articles qui ne sont pas encore stockés dans la boîte d'emballage sur la base de l'agencement réel lorsque l'agencement calculé et l'agencement réel des articles pour lesquels le travailleur met en œuvre le travail d'emballage sont différents.

2. Dispositif d'assistance au travail selon la revendication 1, dans lequel :
l'unité de stockage contient en outre des informations d'un élément de mise en garde lorsque les articles de chaque type sont stockés ; et
le processeur génère l'image d'assistance qui inclut un affichage de l'élément de mise en garde.

3. Dispositif d'assistance au travail selon la revendication 1, dans lequel
le processeur
calcule un agencement de chacun des articles dans la boîte d'emballage sur la base de la taille de la boîte d'emballage, et de la quantité et de la taille des articles de chaque type à stocker dans la boîte d'emballage ; et
génère l'image d'assistance de sorte que des articles devant être en contact avec une surface inférieure de la boîte d'emballage et d'autres articles sont affichés dans différentes zones de l'écran.

4. Dispositif d'assistance au travail selon la revendication 3, dans lequel :
le processeur agence une figure correspondant aux articles devant être en contact avec la surface inférieure de la boîte d'emballage en fonction de l'agencement dans la boîte d'emballage, et génère en outre l'image d'assistance qui affiche une direction de surface latérale longue de la boîte d'emballage.

5. Dispositif d'assistance au travail selon la revendication 4, dans lequel :
le processeur
génère l'image d'assistance qui surplombe un espace tridimensionnel dans lequel la figure correspondant aux articles devant être en contact avec la surface inférieure de la boîte d'emballage et la figure correspondant aux autres articles sont agencées à partir des positions de référence qui sont respectivement différentes dans une direction prédéterminée ; et
modifie l'agencement des deux positions de référence et la direction de surface latérale longue de la boîte d'emballage à afficher en fonction d'une quantité des articles à afficher.

6. Dispositif d'assistance au travail selon la revendication 1, comprenant en outre :
une unité de reconnaissance qui reconnaît au moins une couleur de chacun des articles, dans laquelle
le processeur sélectionne une couleur parmi une ou plusieurs couleurs qui constituent chacun des articles reconnus par l'unité de reconnaissance, et génère l'image d'assistance de manière à afficher la couleur sélectionnée en tant qu'une couleur de la figure correspondant à chacun des articles.

7. Dispositif d'assistance au travail selon la revendication 6, dans lequel :
le processeur sélectionne une couleur différente pour chaque type de l'article.

8. Dispositif d'assistance au travail selon la revendication 1, dans lequel :
le processeur
calcule un agencement de chacun des articles dans la boîte d'emballage sur la base d'une taille de la boîte d'emballage, et de la quantité et de la taille des articles de chaque type à stocker dans la boîte d'emballage ;
génère, en tant que l'image d'assistance, une première image d'assistance qui surplombe un espace tridimensionnel dans lequel la figure correspondant à chacun des articles est agencée dans une direction prédéterminée selon un ordre d'indication des articles de chaque type basé sur une règle prédéterminée, et une deuxième image d'assistance dans laquelle la figure correspondant à chacun des articles est agencée selon un agencement de chacun des articles dans la boîte d'emballage ;
amène l'unité d'affichage à afficher l'une parmi la première image d'assistance et la seconde image d'assistance ; et
commute l'image d'assistance affichée sur l'unité d'affichage lorsqu'une instruction de commutation de l'affichage est appliquée en entrée.

9. Dispositif d'assistance au travail selon la revendication 8, dans lequel :
le processeur ajoute un affichage indiquant que l'article est adjacent à une surface de paroi dans la figure correspondant à un article adjacent à la surface de paroi de la boîte d'emballage parmi les articles agencés dans la boîte d'emballage.

10. Dispositif d'assistance au travail selon la revendication 1, dans lequel :
l'unité de reconnaissance reconnaît un article ramassé par le travailleur de manière à mettre en œuvre le travail d'emballage ; et
le processeur
détermine si l'article reconnu est un article pour lequel le travail d'emballage est mis en œuvre ensuite, sur la base de l'ordre calculé du travail d'emballage ;
détermine si l'article reconnu peut être stocké tel que dans l'agencement calculé sur la base de l'agencement des articles déjà stockés dans la boîte d'emballage, lorsque l'article reconnu n'est pas l'article suivant pour lequel le travail d'emballage est mis en œuvre ;
calcule une position de stockage temporaire de l'article reconnu dans la boîte d'emballage sur la base d'un agencement des articles déjà stockés dans la boîte d'emballage lorsque l'article reconnu ne peut pas être stocké tel que dans l'agencement calculé ; et
génère l'image d'assistance qui inclut la position de stockage temporaire calculée.

11. Dispositif d'assistance au travail selon la revendication 10, dans lequel :
le processeur génère l'image d'assistance qui inclut une instruction de stockage d'un article stocké dans la position de stockage temporaire tel que dans l'agencement calculé.

12. Procédé d'assistance au travail, qui est exécuté par un dispositif d'assistance au travail pour assister dans le cadre d'un travail consistant à stocker une pluralité d'articles d'une pluralité de types dans une boîte d'emballage, dans lequel :
le dispositif d'assistance au travail inclut un processeur, une unité de stockage, une unité d'affichage, une unité de reconnaissance et une unité de lecture d'informations d'instruction, dans lequel
l'unité de stockage contient au moins une taille de l'article de chaque type et contient en outre une taille de la boîte d'emballage, et l'unité de reconnaissance reconnaît un article pour lequel un travailleur met en œuvre le travail de stockage à stocker dans la boîte d'emballage ;
le procédé d'assistance au travail comprenant :
une étape de lecture d'informations d'instruction de travail pour ordonner un travail d'emballage consistant à stocker l'article dans la boîte d'emballage, par le biais de l'unité de lecture d'informations d'instruction ;
une étape d'acquisition d'une quantité et d'une taille de l'article de chaque type à stocker dans la boîte d'emballage sur la base des informations d'instruction de travail et d'informations contenues dans l'unité de stockage, par le biais du processeur ;
une étape de calcul d'un agencement de chacun des articles dans la boîte d'emballage et d'un ordre du travail d'emballage sur la base d'une taille de la boîte d'emballage et de la quantité et de la taille des articles de chaque type à emballer dans la boîte d'emballage ;
une étape de génération d'une image d'assistance qui surplombe un espace tridimensionnel dans lequel une figure, dans laquelle les tailles des articles de chaque type à stocker dans la boîte d'emballage sont réduites à une même échelle, est agencée dans une direction prédéterminée à partir d'une position de référence prédéterminée, selon un ordre d'indication des articles de chaque type basé sur une règle prédéterminée, pour une quantité de chaque type à stocker dans la boîte d'emballage, par le biais du processeur, dans laquelle l'image d'assistance est générée en fonction de l'agencement de chacun des articles dans la boîte d'emballage ;
une étape d'affichage de l'image d'assistance par le biais de l'unité d'affichage ;
une étape d'ajout d'informations qui affiche la figure correspondant à l'article pour lequel le travail d'emballage est mis en œuvre à côté de l'image d'assistance sur la base de l'ordre calculé du travail d'emballage ;
une étape de reconnaissance, par le biais de l'unité de reconnaissance, d'un agencement réel des articles dans la boîte d'emballage pour laquelle un travailleur met en œuvre le travail d'emballage ; et
une étape de recalcul d'un agencement des articles qui n'ont pas encore été stockés dans la boîte d'emballage sur la base de l'agencement réel, lorsque l'agencement calculé et l'agencement réel des articles pour lesquels le travailleur met en œuvre le travail d'emballage sont différents ;
dans laquelle l'unité de stockage contient en outre au moins l'un des éléments parmi un poids, un ordre de collecte et un ordre de stockage des articles de chaque type ; et
l'ordre d'indication des articles de chaque type basé sur la règle prédéterminée est l'un quelconque parmi un ordre de poids, un ordre de volume, un ordre de quantité, l'ordre de collecte et l'ordre de stockage des articles de chaque type, ou une combinaison de deux ou plus d'entre eux, sur la base des informations contenues dans l'unité de stockage.
